(19) **Europäisches Patentamt / European Patent Office / Office européen des brevets**

(11) **EP 4 583 060 A1**

(12) **EUROPEAN PATENT APPLICATION**
published in accordance with Art. 153(4) EPC

(43) Date of publication:
09.07.2025 Bulletin 2025/28

(21) Application number: 24773788.5

(22) Date of filing: 22.01.2024

(51) International Patent Classification (IPC):
**G06T 15/50** (2011.01)

(52) Cooperative Patent Classification (CPC):
**G06T 19/20; G06T 15/20; G06T 15/50;**
**G06T 15/506;** G06T 2219/2012; G06T 2219/2021

(86) International application number:
**PCT/CN2024/073461**

(87) International publication number:
**WO 2024/193219 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 21.03.2023 CN 202310318681

(71) Applicant: **Tencent Technology (Shenzhen)**
**Company Limited**
**Shenzhen, Guangdong 518057 (CN)**

(72) Inventors:
• **HUANG, Jiancong**
**Shenzhen, Guangdong 518057 (CN)**
• **GONG, Minmin**
**Shenzhen, Guangdong 518057 (CN)**
• **JIANG, Huiwen**
**Shenzhen, Guangdong 518057 (CN)**

• **ZHANG, Jiaxuan**
**Shenzhen, Guangdong 518057 (CN)**
• **LI, Junfeng**
**Shenzhen, Guangdong 518057 (CN)**
• **LAN, Wei**
**Shenzhen, Guangdong 518057 (CN)**
• **PAN, Yucong**
**Shenzhen, Guangdong 518057 (CN)**
• **DAI, Kai**
**Shenzhen, Guangdong 518057 (CN)**
• **GUO, Jiaqi**
**Shenzhen, Guangdong 518057 (CN)**
• **LIU, Mali**
**Shenzhen, Guangdong 518057 (CN)**
• **LI, Lihua**
**Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **ILLUMINATION UPDATE METHOD AND APPARATUS FOR VIRTUAL SCENE, ELECTRONIC DEVICE, COMPUTER READABLE STORAGE MEDIUM, AND COMPUTER PROGRAM PRODUCT**

(57) Embodiments of the present application provide an illumination update method and apparatus for a virtual scene, an electronic device, a computer readable storage medium, and a computer program product. The method comprises: performing voxelization processing on a virtual scene to obtain a plurality of initial voxels corresponding to the virtual scene; in response to a change in the content of the virtual scene, selecting at least one voxel to be updated from the plurality of initial voxels, wherein the number of voxels to be updated is less than the number of initial voxels; updating illumination information carried by each voxel to be updated, to obtain updated voxels corresponding to each voxel to be updated; and according to the updated voxels and initial voxels among the plurality of initial voxels other than the voxel to be updated, updating illumination information of virtual viewpoints in the virtual scene of which the content changes, wherein the virtual viewpoints are virtual scene points, which can be captured by a virtual camera, in the virtual scene of which the content changes.

EP 4 583 060 A1

Perform voxelization processing on a virtual scene to obtain a plurality of initial voxels corresponding to the virtual scene — 101

Select at least one to-be-updated voxel from the plurality of initial voxels in response to a content change in the virtual scene — 102

Update light information carried in each to-be-updated voxel, to obtain an updated voxel corresponding to each to-be-updated voxel — 103

Update light information of each virtual viewpoint in a virtual scene with changed content based on the updated voxel and an initial voxel among the plurality of initial voxels other than the to-be-updated voxel — 104

# FIG. 3

## Description

RELATED APPLICATION

This application claims priority to Chinese Patent Application No. 2023103186815 filed on March 21, 2023, which is incorporated herein by reference in its entirety.

FIELD OF THE TECHNOLOGY

The present disclosure relates to the field of computer technologies, and in particular, to a method and an apparatus for updating light in a virtual scene, an electronic device, a computer-readable storage medium, and a computer program product.

BACKGROUND OF THE DISCLOSURE

With development of multimedia technologies, types of games are increasingly diversified, and functions are increasingly enriched. To provide a player with more real game experience, a person skilled in the art focuses on improving fineness of a game picture. For example, a person skilled in the art improves overall fineness of a game picture by improving a degree of realism of light in the game picture.

In the related art, for high-frequency indirect light information restored by using a screen space occlusion technology, because a light update needs to be comprehensively performed on an entire virtual scene, light update efficiency for the virtual scene is low.

SUMMARY

Embodiments of the present disclosure provide a method and an apparatus for updating light in a virtual scene, an electronic device, a computer-readable storage medium, and a computer program product, to effectively improve light update efficiency for a virtual scene.

Technical solutions in embodiments of the present disclosure are implemented as follows:

Embodiments of the present disclosure provide a method for updating light in a virtual scene, including:

performing voxelization processing on a virtual scene to obtain a plurality of initial voxels,

different ones of the plurality of initial voxels comprising different positions in the virtual scene, and each of the plurality of initial voxels carrying light information of a corresponding position in the virtual scene;

selecting at least one to-be-updated voxel from the plurality of initial voxels in response to a content change in the virtual scene, a quantity of to-be-updated voxels being less than a quantity of initial voxels;

updating light information carried in each to-be-updated voxel, to obtain an updated voxel corresponding to each to-be-updated voxel; and

updating light information of each virtual viewpoint in a virtual scene with changed content based on the updated voxel and an initial voxel among the plurality of initial voxels other than the to-be-updated voxel,

the virtual viewpoint being a virtual scene point able to be captured by a virtual camera in the virtual scene with changed content.

Embodiments of the present disclosure provide an apparatus for updating light in a virtual scene, including:

a voxelization module, configured to perform voxelization processing on a virtual scene to obtain a plurality of initial voxels, different ones of the plurality of initial voxels comprising different positions in the virtual scene, and each of the plurality of initial voxels carrying light information of a corresponding position in the virtual scene;

a selection module, configured to select at least one to-be-updated voxel from the plurality of initial voxels in response to a content change in the virtual scene, a quantity of to-be-updated voxels being less than a quantity of initial voxels;

a voxel update module, configured to update light information carried in each to-be-updated voxel, to obtain an updated voxel corresponding to each to-be-updated voxel; and

a light update module, configured to update light information of each virtual viewpoint in a virtual scene with changed content based on the updated voxel and an initial voxel among the plurality of initial voxels other than the to-be-updated voxel, the virtual viewpoint being a virtual scene point able to be captured by a virtual camera in the virtual scene with changed content.

Embodiments of the present disclosure provide an electronic device, including:

a memory, configured to store computer-executable instructions or a computer program; and

a processor, configured to implement the light update method for a virtual scene provided in embodiments of the present disclosure when executing the computer-executable instructions or the computer program stored in the memory.

Embodiments of the present disclosure provide a computer-readable storage medium, having computer-executable instructions stored therein. The computer-executable instructions are configured for implementing the light update method for a virtual scene provided in embodiments of the present disclosure when being executed by a processor.

Embodiments of the present disclosure provide a computer program product. The computer program product includes a computer program or computer-executable instructions. The computer program or the computer-executable instructions are stored in a computer-readable storage medium. A processor of an electronic device reads the computer-executable instructions from the computer-readable storage medium, and the processor executes the computer-executable instructions, so that the electronic device performs the light update method for a virtual scene in embodiments of the present disclosure.

Embodiments of the present disclosure have the following beneficial effects:

Voxelization processing is performed on a virtual scene to obtain a plurality of initial voxels corresponding to the virtual scene. At least one to-be-updated voxel is selected from the plurality of initial voxels in response to a content change in the virtual scene. Light information carried in each to-be-updated voxel is updated. Light information of each virtual viewpoint in a changed virtual scene is updated based on the updated voxel and an initial voxel among the plurality of initial voxels other than the to-be-updated voxel. In this way, at least one to-be-updated voxel is selected from the plurality of initial voxels in response to the content change in the virtual scene. Because a quantity of to-be-updated voxels is less than a quantity of initial voxels, the quantity of to-be-updated voxels is effectively reduced, so that update costs are effectively reduced, and light update efficiency for the virtual scene can be effectively improved.

BRIEF DESCRIPTION OF THE DRAWINGS

FIG. 1 is a schematic diagram of an architecture of a light update system for a virtual scene according to an embodiment of the present disclosure.

FIG. 2 is a schematic diagram of a structure of an electronic device for a light update for a virtual scene according to an embodiment of the present disclosure.

FIG. 3 is a schematic flowchart 1 of a method for updating light in a virtual scene according to an embodiment of the present disclosure.

FIG. 4 is a schematic flowchart 2 of a method for updating light in a virtual scene according to an embodiment of the present disclosure.

FIG. 5 is a schematic flowchart 3 of a method for updating light in a virtual scene according to an embodiment of the present disclosure.

FIG. 6 is a schematic flowchart 4 of a method for updating light in a virtual scene according to an embodiment of the present disclosure.

FIG. 7 is a schematic flowchart 5 of a method for updating light in a virtual scene according to an embodiment of the present disclosure.

FIG. 8 is a schematic flowchart 6 of a method for updating light in a virtual scene according to an embodiment of the present disclosure.

FIG. 9 is a schematic flowchart 7 of a method for updating light in a virtual scene according to an embodiment of the present disclosure.

FIG. 10 is a schematic diagram of a rendering effect of a method for updating light in a virtual scene according to an embodiment of the present disclosure.

FIG. 11 is a schematic flowchart 8 of a method for updating light in a virtual scene according to an embodiment of the present disclosure.

FIG. 12 is a schematic flowchart 9 of a method for updating light in a virtual scene according to an embodiment of the present disclosure.

FIG. 13 is a schematic diagram of a principle of a starting point according to an embodiment of the present disclosure.

FIG. 14 is a schematic flowchart 10 of a method for updating light in a virtual scene according to an embodiment of the present disclosure.

FIG. 15 is a schematic flowchart 11 of a method for updating light in a virtual scene according to an embodiment of the present disclosure.

FIG. 16 is a schematic flowchart 12 of a method for updating light in a virtual scene according to an embodiment of the present disclosure.

FIG. 17 is a schematic flowchart 13 of a method for updating light in a virtual scene according to an embodiment of the present disclosure.

DESCRIPTION OF EMBODIMENTS

To make the objectives, technical solutions, and advantages of the present disclosure clearer, the following describes the present disclosure in further detail with reference to the accompanying drawings. The described embodiments are not to be considered as a limitation to the present disclosure. All other embodiments obtained by a person of ordinary skill in the art without creative efforts shall fall within the protection scope of the present disclosure.

In the following descriptions, the term "some embodiments" describes subsets of all possible embodiments, but "some embodiments" may be the same subset or different subsets of all the possible embodiments, and can be combined with each other without conflict.

In the following descriptions, the terms "first", "second", and "third" are merely intended to distinguish between similar objects rather than describe a specific order of objects. The "first", "second", and "third" are interchangeable in order in proper circumstances, so that embodiments of the present disclosure described herein can be implemented in an order other than the order illustrated or described herein.

Unless otherwise defined, meanings of all technical and scientific terms used in this specification are the same as those usually understood by a person skilled in the art to which the present disclosure belongs. The terms used in this specification are merely intended to describe the objectives of embodiments of the present disclosure, but are not intended to limit the present disclosure.

Before embodiments of the present disclosure are further described in detail, terms in embodiments of the present disclosure are described, and the following explanations are applicable to the terms in embodiments of the present disclosure.

(1) Camera model: It is configured for describing a process of mapping a coordinate point in a three-dimensional world coordinate system to a two-dimensional image plane, and is a bond for implementing a connection between a point in three-dimensional space and a point on a two-dimensional plane. The camera model includes at least a pinhole camera model and a fisheye camera model. The pinhole camera model is used as an example for description. Four coordinate systems exist in the pinhole camera model: a three-dimensional world coordinate system, a three-dimensional camera coordinate system, a two-dimensional image physical coordinate system, and a two-dimensional image pixel coordinate system.

(2) Virtual scene: It is a virtual scene displayed or provided by an application when the application is run on a terminal. The virtual scene may be a simulated environment of a real world, or may be a semi-simulated semi-fictional virtual environment, or may be an entirely fictional virtual environment. The virtual scene may be any one of a two-dimensional virtual scene, a 2.5-dimensional virtual scene, or a three-dimensional virtual scene. A dimension of the virtual scene is not limited in embodiments of the present disclosure. For example, the virtual scene may include the sky, the land, or the ocean. The land may include environmental elements such as the desert and a city. A user may control a virtual object to move in the virtual scene.

(3) Virtual object: It is an image of any person or object that can perform interaction in a virtual scene, or a movable object in a virtual scene. The movable object may be a virtual person, a virtual animal, a cartoon person, or the like, for example, a character, an animal, a plant, an oil drum, a wall, or a stone displayed in a virtual scene. The virtual object may be a virtual image configured for representing a user in the virtual scene. The virtual scene may include a plurality of virtual objects, and each virtual object has a shape and a volume in the virtual scene, and occupies some space in the virtual scene. In some embodiments, the virtual object may be a player character controlled through an operation on a client, or may be artificial intelligence (AI) configured in a virtual scene combat through training, or may be a non-player character (NPC) configured in interaction in the virtual scene. In some embodiments, the virtual object may be a virtual character performing adversarial interaction in a virtual scene. In some embodiments, a quantity of virtual objects participating in interaction in the virtual scene may be preset, or may be dynamically determined based on a quantity of clients participating in the interaction.

(4) Virtual item: It is a moving or stationary item in a virtual scene. Moving virtual items include an animal, a vehicle, a person, and the like in the virtual scene. Stationary virtual items include a wall, a stone, the ground, and the like in the virtual scene.

(5) Virtual ray: It is a ray in a virtual scene that is emitted by a virtual light source and that is configured for illuminating the virtual scene. The virtual ray includes a direct ray and an indirect ray. The direct ray is a virtual ray that is emitted by the virtual light source and that is reflected by a virtual light point to a virtual camera. The indirect ray is a virtual ray that is emitted by the virtual light source and that reaches a virtual light point through at least one time of reflection and is finally reflected by the virtual light point to the virtual camera.

(6) Irradiance: It is also referred to as radiance, and is a radiant flux in a unit area of an irradiated surface and is measured in watt per square meter ($W/m^2$). The radiance represents an amount of radiant energy received within unit time per unit area on a surface irradiated by radiant energy, that is, radiant flux density on an irradiated surface.

(7) Virtual camera: It is a "camera" built in computer animation software or a virtual engine. A function of the virtual camera for representing a viewpoint during animation production is equivalent to a camera in a conventional sense. An object photographed by the virtual camera is completely different from an object photographed by a physical camera, but functions of the cameras are quite similar. The physical camera photographs a real person or an actually established scene. The virtual camera photographs a model established in three-dimensional software, and can implement infinite possibilities. The virtual camera is presented in a virtual engine in a form of an icon, and also has parameters such as a lens, a focal length, a focus, an aperture, and a depth of field. The virtual camera can implement camera actions such as "pushing, pulling, shaking, moving, following, throwing, rising, lowering, and comprehensive movement", and can implement photographing effects that are difficult or even impossible to be implemented by the physical camera, for example, passing through a wall, passing through a keyhole, and passing through an object. Parameters that need to be adjusted for the physical camera are distributed on a body of the physical camera, and manual operations are required. A camera parameter of the virtual camera is a button or a value input bar integrated in a panel. An operator only needs to enter a parameter or drag a mouse. Sometimes, a motion path of the virtual camera may be determined by using only several key frames. During actual photographing, the physical camera usually needs to have a stabilizer or a motion control system. However, even in this case, a picture still shakes.

(8) Virtual engine: The virtual engine includes some editable computer virtual systems that have been written or core components of some interactive real-time image applications. These systems provide a virtual scene designer with various tools required for writing a virtual scene, and are intended to enable the designer to easily and quickly write a program. The virtual engine includes a rendering engine (the rendering engine includes a two-dimensional rendering engine and a three-dimensional rendering engine), a physical engine, a collision detection engine, a sound effect engine, a script engine, an animation engine, an AI engine, a network engine, a scene management engine, and the like.

(9) Virtual light source: It is a "light source" built in computer animation software or a virtual engine. A function of the virtual light source for representing a viewpoint during animation production is equivalent to a physical light source in a conventional sense. An object irradiated by the virtual light source is completely different from an object irradiated by the physical light source, but functions of the light sources are quite similar. The physical light source irradiates a real person or an actually established scene. The virtual light source irradiates a model established in three-dimensional software, and can implement infinite possibilities.

During implementation of embodiments of the present disclosure, the applicant finds that the related art has the following problems:

In the related art, for high-frequency indirect light information restored by using a screen space occlusion technology, because a light update needs to be comprehensively performed on an entire virtual scene, light update efficiency for the virtual scene is low.

Embodiments of the present disclosure provide a light update method and apparatus for a virtual scene, an electronic device, a computer-readable storage medium, and a computer program product, to effectively improve light update efficiency for a virtual scene. The following describes exemplary application of a light update system for a virtual scene provided in embodiments of the present disclosure.

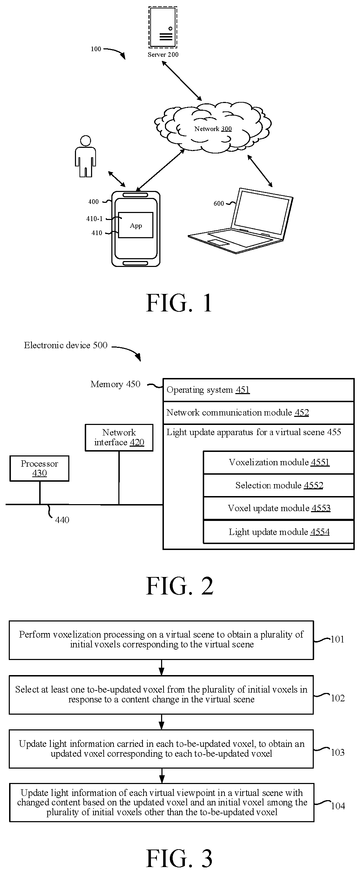

FIG. 1 is a schematic diagram of an architecture of a light update system 100 for a virtual scene according to an embodiment of the present disclosure. A terminal (a terminal 400 is shown as an example) is connected to a server 200 through a network 300. The network 300 may be a wide area network, a local area network, or a combination thereof.

The terminal 400 is configured to display a virtual scene on a graphical interface 410-1 (a graphical interface 410-1 is shown as an example) by a user by using a client 410. The terminal 400 and the server 200 are connected to each other through a wired or wireless network.

In some embodiments, the server 200 may be an independent physical server, or may be a server cluster or a distributed system that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. The terminal 400 may be a smartphone, a tablet computer, a notebook computer, a desktop computer, a smart speaker, a smart television, a smartwatch, an in-vehicle terminal, or the like, but is not limited thereto. The electronic device provided in embodiments of the present disclosure may be implemented by a terminal, or may be implemented by a server. The terminal and the server may be directly or indirectly connected through wired or wireless communication. This is not limited in embodiments of the present disclosure.

In some embodiments, the terminal 400 sends a virtual scene to the server 200; and the server 200 performs voxelization processing on the virtual scene to obtain a plurality of initial voxels, selects at least one to-be-updated voxel from the plurality of initial voxels in response to a content change in the virtual scene, updates light information carried in each to-be-updated voxel to obtain an updated voxel corresponding to each to-be-updated voxel, and updates light information of each virtual viewpoint in a changed virtual scene.

In some other embodiments, the server 200 performs voxelization processing on a virtual scene to obtain a plurality of initial voxels corresponding to the virtual scene, selects at least one to-be-updated voxel from the plurality of initial voxels in response to a content change in the virtual scene, and sends the to-be-updated voxel to the terminal 400; and the terminal 400 updates light information carried in each to-be-updated voxel to obtain an updated voxel corresponding to each to-be-updated voxel, and updates light information of each virtual viewpoint in a changed virtual scene.

In some embodiments, the terminal 400 sends a virtual scene to the server 200; and the server 200 performs voxelization processing on the virtual scene to obtain a plurality of initial voxels, selects at least one to-be-updated voxel from the plurality of initial voxels in response to a content change in the virtual scene, updates light information carried in each to-be-updated voxel to obtain an updated voxel corresponding to each to-be-updated voxel, and updates light information of each virtual viewpoint in a changed virtual scene.

In some other embodiments, embodiments of the present disclosure may be implemented by using a cloud technology. The cloud technology is a hosting technology that integrates a series of resources such as hardware, software, and network resources in a wide area network or a local area network to implement data computing, storage, processing, and sharing.

The cloud technology is a general term for a network technology, an information technology, an integration technology, a management platform technology, an application technology, and the like that are based on application of a cloud computing business model, and may constitute a resource pool for use on demand and therefore is flexible and convenient. A cloud computing technology is to become an important support. A background service of a technology network system requires a large number of computing and storage resources.

FIG. 2 is a schematic diagram of a structure of an electronic device 500 for a light update for a virtual scene according to an embodiment of the present disclosure. The electronic device 500 shown in FIG. 2 may be the server 200 or the terminal 400 shown in FIG. 1. The electronic device 500 shown in FIG. 2 includes at least one processor 430, a memory 450, and at least one network interface 420. The components in the electronic device 500 are coupled together through a bus system 440. The bus system 440 is configured to implement connection and communication between the components. In addition to a data bus, the bus system 440 further includes a power bus, a control bus, and a state signal bus. However, for ease of clear description, all types of buses in FIG. 2 are marked as the bus system 440.

The processor 430 may be an integrated circuit chip with a signal processing capability, for example, a general-purpose processor, a digital signal processor (DSP), another programmable logic device, a discrete gate or transistor logic device, or a discrete hardware component. The general-purpose processor may be a microprocessor, any conventional processor, or the like.

The memory 450 may be a removable memory, a non-removable memory, or a combination thereof. For example, a hardware device includes a solid-state memory, a hard disk drive, or an optical drive. In some embodiments, the memory 450 includes one or more storage devices physically located away from the processor 430.

The memory 450 includes a volatile memory or a non-volatile memory, or may include both a volatile memory and a non-volatile memory. The non-volatile memory may be a read-only memory (ROM). The volatile memory may be a random access memory (RAM). The memory 450 described in this embodiment of the present disclosure is intended to include any suitable types of memories.

In some embodiments, the memory 450 is capable of storing data to support various operations. Examples of the data include a program, a module, and a data structure or a subset or superset thereof. Examples are described below:

An operating system 451 includes system programs for processing various basic system services and performing hardware-related tasks, for example, a framework layer, a kernel library layer, and a driver layer for implementing various basic services and processing hardware-based tasks.

A network communication module 452 is configured to reach another electronic device through one or more (wired or wireless) network interfaces 420. For example, the network interface 420 includes Bluetooth, wireless fidelity (Wi-Fi), universal serial bus (USB), and the like.

In some embodiments, the light update apparatus for a virtual scene provided in embodiments of the present disclosure may be implemented by using software. FIG. 2 shows a light update apparatus 455 for a virtual scene stored in the memory 450. The light update apparatus 455 for a virtual scene may be software in a form of a program, a plug-in, or the like, and includes the following software modules: a voxelization module 4551, a selection module 4552, a voxelization update module 4553, and a light update module 4554. These modules are logical modules, and therefore may be flexibly combined or further split based on implemented functions. Functions of the modules are described below.

In some other embodiments, the light update apparatus for a virtual scene provided in embodiments of the present disclosure may be implemented by using hardware. In an example, the light update apparatus for a virtual scene provided in embodiments of the present disclosure may be a processor in a form of a hardware decoding processor, and is programmed to perform the light update method for a virtual scene provided in embodiments of the present disclosure. For example, the processor in the form of the hardware decoding processor may be one or more application-specific integrated circuits (ASICs), DSPs, programmable logic devices (PLDs), complex programmable logic devices (CPLDs), field-programmable gate arrays (FPGAs), or other electronic elements.

In some embodiments, the terminal or the server may implement the light update method for a virtual scene provided in embodiments of the present disclosure by running a computer program or computer-executable instructions. For example, the computer program may be a native program (for example, a dedicated light update program) or a software module in an operating system, for example, a light update module that may be embedded in any program (for example, an instant messaging client, an album program, an electronic map client, or a navigation client). For example, the computer program may be a native application (APP), to be specific, a program that needs to be installed in an operating system to run. To sum up, the computer program may be an application, a module, or a plug-in in any form.

The light update method for a virtual scene provided in embodiments of the present disclosure is described with reference to the exemplary application and implementation of the server or the terminal provided in embodiments of the present disclosure.

FIG. 3 is a schematic flowchart 1 of a light update method for a virtual scene according to an embodiment of the present disclosure. Descriptions are provided with reference to operation 101 to operation 104 shown in FIG. 3. The light update method for a virtual scene provided in this embodiment of the present disclosure may be independently implemented by a server or a terminal, or may be jointly implemented by a server and a terminal. An example in which the light update method for a virtual scene is independently implemented by a terminal is used below for description.

Operation 101: Perform voxelization processing on a virtual scene to obtain a plurality of initial voxels corresponding to the virtual scene.

In some embodiments, different initial voxels have different positions in the virtual scene, and the initial voxel carries light information of a corresponding position in the virtual scene.

In some embodiments, the virtual scene is a virtual scene displayed or provided by an application when the application is run on a terminal. The virtual scene may be a simulated environment of a real world, or may be a semi-simulated semi-fictional virtual environment, or may be an entirely fictional virtual environment. The virtual scene may be any one of a two-dimensional virtual scene, a 2.5-dimensional virtual scene, or a three-dimensional virtual scene. A dimension of the virtual scene is not limited in this embodiment of the present disclosure. For example, the virtual scene may include the sky, the land, or the ocean. The land may include environmental elements such as the desert and a city. A user may control a virtual object to move in the virtual scene.

In some embodiments, the voxelization processing is a processing process of dividing the virtual scene into the plurality of initial voxels, the initial voxel carries light information of a corresponding position in the virtual scene, and different initial voxels have different positions in the virtual scene.

In some embodiments, operation 101 may be implemented in the following manner: The virtual scene is divided into a plurality of virtual scene blocks. Positions of the virtual scene blocks in the virtual scene are different, and sizes of the virtual scene blocks may be the same or different. Virtual scene information corresponding to each virtual scene block is obtained. The virtual scene information includes a virtual scene color, diffuse reflection information of the virtual scene, direct light information, and the like. Corresponding virtual scene information is assigned to each virtual scene block to obtain an initial voxel corresponding to the virtual scene block.

In some embodiments, a voxel carrying normal line information is configured for representing a surface element, to simplify description of a three-dimensional scene. First, cuboid space with a camera as a center is maintained, and a voxel is configured for simplifying description of three-dimensional scene information in the space. Content of the voxel includes a normal line, a diffuse reflection color, direct light information, and radiance information. To reduce memory consumption, in this embodiment of the present disclosure, voxels are sparsely stored in a hierarchical manner, and $4\times4\times4$ voxels are considered as a group, which is referred to as a brick. A hierarchical index is represented by an $n\times m\times k$ three-dimensional map. If a brick includes a voxel, an actual storage position of the voxel may be obtained based on the hierarchical index. If a value obtained based on the hierarchical index is 0, the brick does not include a voxel. In this way, memory space can be greatly saved.

Operation 102: Select at least one to-be-updated voxel from the plurality of initial voxels in response to a content change in the virtual scene.

In some embodiments, a quantity of to-be-updated voxels is less than a quantity of initial voxels. Because the quantity of to-be-updated voxels is less than the quantity of initial voxels, the quantity of to-be-updated voxels is effectively reduced, so that update costs are effectively reduced, and light update efficiency for the virtual scene can be effectively improved.

In some embodiments, the content change in the virtual scene may be movement of a virtual item or movement of a virtual object in the virtual scene, a change in a color or a form of a virtual item or a virtual object in the virtual scene, or the like. Content changes may occur in the virtual scene at different time points. For example, a virtual object A moves from a position B to a position C in the virtual scene, and a content change occurs in the virtual scene during the movement from the position B to the position C.

In some embodiments, duration of the content change in the virtual scene may be determined based on an actual change situation. The duration of the content change in the virtual scene may be a range of a time interval from the start of the charge to the end of the change.

In an example, the virtual object A in the virtual scene starts to move at the twelfth minute and the tenth second. To be specific, a content change starts to occur in the virtual scene at the twelfth minute and the tenth second. During the movement, the virtual object A starts from the position B until the virtual object A moves to the position C. Time at which the virtual object A moves to the position C is the fourteenth minute and the twentieth second. To be specific, the content change stops in the virtual scene at the fourteenth minute and the twentieth second.

In some embodiments, in a process of selecting at least one to-be-updated voxel from the plurality of initial voxels, a quantity of selection actions is positively correlated with the duration of the content change in the virtual scene. For example, if the duration of the content change in the virtual scene is 10 seconds, a to-be-updated voxel is selected from the plurality of initial voxels at least once per second during the 10 seconds in which the content change occurs. Longer duration of the content change in the virtual scene indicates a larger quantity of selected to-be-updated voxels.

In some embodiments, the content change in the virtual scene may be movement of a virtual light source in the virtual scene. A light source position of the virtual light source and light intensity of the virtual light source may change in the virtual scene at different time points. For example, a virtual light source D moves from a position E to a position F in the virtual scene, and a content change occurs in the virtual scene during the movement from the position E to the position F. For another example, a content change occurs in the virtual scene in a process in which light intensity of the virtual light source becomes stronger or weaker.

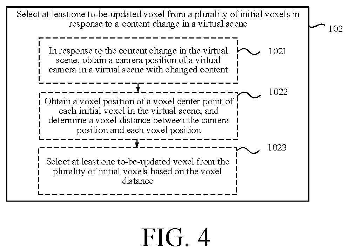

In some embodiments, operation 102 is described below by using an example in which a voxel is selected once. FIG. 4 is a schematic flowchart 2 of a light update method for a virtual scene according to an embodiment of the present disclosure. Operation 102 shown in FIG. 4 may be implemented by using operation 1021 to operation 1023 shown in FIG. 4.

Operation 1021: In response to the content change in the virtual scene, obtain a camera position of a virtual camera in a virtual scene with changed content.

In some embodiments, the virtual camera is a "camera" built in computer animation software or a virtual engine. A function of the virtual camera for representing a viewpoint during animation production is equivalent to a camera in a conventional sense. An object photographed by the virtual camera is completely different from an object photographed by a physical camera, but functions of the cameras are quite similar. The physical camera photographs a real person or an actually established scene. The virtual camera photographs a model established in three-dimensional software, and can implement infinite possibilities. The virtual camera is presented in a virtual engine in a form of an icon, and also has parameters such as a lens, a focal length, a focus, an aperture, and a depth of field. The virtual camera can implement camera actions such as "pushing, pulling, shaking, moving, following, throwing, rising, lowering, and comprehensive movement", and can implement photographing effects that are difficult or even impossible to be implemented by the physical camera, for example, passing through a wall, passing through a keyhole, and passing through an object. Parameters that need to be adjusted for the physical camera are distributed on a body of the physical camera, and manual operations are required. A camera parameter of the virtual camera is a button or a value input bar integrated in a panel. An operator only needs to enter a parameter or drag a mouse. Sometimes, a motion path of the virtual camera may be determined by using only several key frames. During actual photographing, the physical camera usually needs to have a stabilizer or a motion control system. However, even in this case, a picture still shakes.

In some embodiments, the camera position indicates position coordinates of the virtual camera in the virtual scene with changed content. When the virtual scene is a two-dimensional virtual scene, the position coordinates are two-dimensional position coordinates. When the virtual scene is a three-dimensional virtual scene, the position coordinates are three-dimensional position coordinates.

In an example, if a camera position of the virtual camera in the virtual scene is a position G and the camera position of the virtual camera in the virtual scene with changed content is a position H, the virtual camera has a position offset in the virtual scene before and after the position changes. If a camera position of the virtual camera in the virtual scene is a position G and the camera position of the virtual camera in the virtual scene with changed content is the position G, the virtual camera has no position offset in the virtual scene before and after the position changes.

Operation 1022: Obtain a voxel position of a voxel center point of each initial voxel in the virtual scene, and determine a voxel distance between the camera position and each voxel position.

In some embodiments, the voxel position of the voxel center point of the initial voxel in the virtual scene indicates position coordinates of the voxel center point in the virtual scene. When the virtual scene is a two-dimensional virtual scene, the position coordinates are two-dimensional position coordinates. When the virtual scene is a three-dimensional virtual scene, the position coordinates are three-dimensional position coordinates.

**In** some embodiments, the voxel distance between the camera position and each voxel position may be determined by using a distance calculation method such as a Euclidean distance, a Manhattan distance, or a Chebyshev distance. A specific calculation method for the voxel distance does not constitute a limitation on the present disclosure. The voxel distance indicates a distance between a voxel center point of an initial voxel and the virtual camera.

Operation 1023: Select at least one to-be-updated voxel from the plurality of initial voxels based on the voxel distance.

In some embodiments, an initial voxel with a smaller voxel distance has a higher probability of being selected as a to-be-updated voxel, and a value of the voxel distance is directly proportional to a value of a probability of being selected as a to-be-updated voxel.

In some embodiments, operation 1023 may be implemented in the following manner: determining the initial voxel as a first initial voxel when the voxel distance of the initial voxel is less than or equal to a voxel distance threshold; or determining the initial voxel as a second initial voxel when the voxel distance of the initial voxel is greater than the voxel distance threshold; and selecting a first quantity of first initial voxels and a second quantity of second initial voxels from the plurality of initial voxels, and determining the selected first initial voxel and second initial voxel as the to-be-updated voxel.

In some embodiments, the first quantity is greater than the second quantity, and the first quantity is at least one. Because the first quantity is greater than the second quantity and the first quantity is at least one, the second quantity is at least zero.

In some embodiments, the voxel distance threshold may be specifically set based on a real situation, and the voxel distance threshold is less than a maximum voxel distance. Initial voxels may be classified into the first initial voxel and the second initial voxel based on comparison between voxel distances and the voxel distance threshold. A voxel distance of the first initial voxel is less than a voxel distance of the second initial voxel.

In this way, the first quantity of first initial voxels and the second quantity of second initial voxels are selected from the plurality of initial voxels, and the selected first initial voxel and second initial voxel are determined as the to-be-updated voxel. Because the selected first quantity is greater than the second quantity, a quantity of selected second initial voxels farther away from the virtual camera is less than a quantity of first initial voxels closer to the virtual camera. Because a possibility that the first initial voxel closer to the virtual camera includes a virtual viewpoint is higher, selecting more first initial voxels can effectively ensure that light information of the virtual viewpoint is subsequently updated. This effectively ensures light update accuracy for the virtual viewpoint, and therefore effectively improves light update accuracy.

In an example, when the quantity of initial voxels is 10, a quantity of first initial voxels whose voxel distances are less than or equal to the voxel distance threshold may be 5, a quantity of second initial voxels whose voxel distances are greater than the voxel distance threshold may be 5, the selected first quantity may be 3, and the selected second quantity may be 1.

In an example, when the quantity of initial voxels is 10, a quantity of first initial voxels whose voxel distances are less than or equal to the voxel distance threshold may be 5, a quantity of second initial voxels whose voxel distances are greater than the voxel distance threshold may be 5, the selected first quantity may be 1, and the selected second quantity may be 0.

In this way, at least one to-be-updated voxel is selected from the plurality of initial voxels in response to the content change in the virtual scene, and the quantity of to-be-updated voxels is less than the quantity of initial voxels. Because the quantity of to-be-updated voxels is less than the quantity of initial voxels, the quantity of to-be-updated voxels is effectively reduced, so that update costs are effectively reduced, and light update efficiency for the virtual scene can be effectively improved.

Operation 103: Update light information carried in each to-be-updated voxel, to obtain an updated voxel corresponding to each to-be-updated voxel.

In some embodiments, operation 103 may be implemented in the following manner: performing the following processing on each to-be-updated voxel: updating light information, carried in the to-be-updated voxel, of a corresponding position in the virtual scene, to obtain an updated voxel corresponding to the to-be-updated voxel.

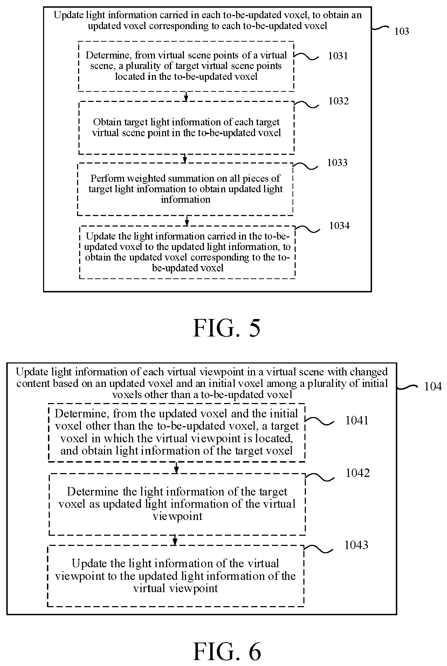

In some embodiments, FIG. 5 is a schematic flowchart 3 of a light update method for a virtual scene according to an embodiment of the present disclosure. Operation 103 shown in FIG. 3 may be implemented by performing operation 1031 to operation 1034 shown in FIG. 5 on each to-be-updated voxel.

Operation 1031: Determine, from virtual scene points of the virtual scene, a plurality of target virtual scene points located in the to-be-updated voxel.

In some embodiments, a virtual scene point is a minimum constituent unit in the virtual scene, the virtual scene includes a plurality of virtual scene points, and different virtual scene points have different positions in the virtual scene.

In some embodiments, operation 1031 may be implemented in the following manner: performing the following processing on each virtual scene point in the virtual scene: comparing a scene point position of the virtual scene point in the virtual scene with a voxel position range of the to-be-updated voxel in the virtual scene, and determining the virtual scene point as a target virtual scene point when the scene point position falls within the voxel position range.

In an example, the scene point position of the virtual scene point in the virtual scene is (0.2, 5), a horizontal coordinate of the voxel position range of the to-be-updated voxel in the virtual scene ranges from 0 to 1, and a vertical coordinate ranges from 4 to 6. In this case, the scene point position falls within the voxel position range, and the virtual scene point is determined as a target virtual scene point.

Operation 1032: Obtain target light information of each target virtual scene point in the to-be-updated voxel.

In some embodiments, the target light information indicates light intensity or irradiance reflected at the target virtual scene point. The light intensity is a light flux of received visible light per unit area. The light intensity is referred to as radiance for short, and is measured in Lux (or 1x). The light intensity indicates intensity of light and an amount of light in a surface area of an object. The irradiance, also referred to as radiance, is a radiant flux in a unit area of an irradiated surface and is measured in watt per square meter ($W/m^2$).

In some embodiments, operation 1032 may be implemented in the following manner: performing the following processing on each target virtual scene point in the to-be-updated voxel: obtaining direct light information of the target virtual scene point; obtaining indirect light information of the target virtual scene point; and summing the direct light information and the indirect light information to obtain the target light information of the target virtual scene point.

In some embodiments, the direct light information indicates impact of a direct ray emitted by the virtual light source on light of the target virtual scene point, and the indirect light information indicates impact of a reflected ray corresponding to the direct ray on light of the target virtual scene point.

In some embodiments, when the direct light information is direct light intensity and the indirect light information is indirect light intensity, the direct light intensity and the indirect light intensity are summed to obtain a light intensity sum value, and the light intensity sum value is determined as the target light information of the target virtual scene point.

In an example, an expression of the target light information of the target virtual scene point may be as follows:

$$G = G_1 + G_2 \qquad (1)$$

G indicates the target light information of the target virtual scene point, $G_1$ indicates the direct light information of the target virtual scene point, and $G_2$ indicates the indirect light information of the target virtual scene point.

In some embodiments, when the indirect light information is indirect light irradiance and the direct light information is direct light irradiance, the direct light irradiance and the indirect light irradiance are summed to obtain a light irradiance sum value, and the light irradiance sum value is determined as the target light information of the target virtual scene point.

In some embodiments, the direct light information includes direct light intensity, and the obtaining direct light information of the target virtual scene point may be implemented in the following manner: determining a light source distance between the virtual light source in the virtual scene and the target virtual scene point; obtaining a camera distance between the target virtual scene point and the virtual camera, and adding up the camera distance and the light source distance to obtain a total distance; determining a loss value of light source light intensity of the virtual light source based on the total distance and the target virtual scene point; and subtracting the loss value from the light source light intensity to obtain the direct light intensity of the target virtual scene point.

In some embodiments, the loss value of the light source light intensity of the virtual light source is a loss of the light source light intensity during ray transmission of a virtual ray transmitted by the virtual light source from the virtual light source to the target virtual scene point and from the target virtual scene point to the virtual camera.

In some embodiments, the determining a loss value of light source light intensity of the virtual light source based on the total distance and the target virtual scene point may be implemented in the following manner: determining a first loss value of the virtual light source based on the total distance, determining a second loss value of the virtual light source based on the target virtual scene point, and adding up the first loss value and the second loss value to obtain the loss value of the light source light intensity of the virtual light source.

In some embodiments, the first loss value indicates a loss of the light source light intensity of the virtual light source in a ray path, and the second loss value indicates a loss of the light source light intensity of the virtual light source at a target virtual point.

In some embodiments, the ray path includes a first sub-path with the virtual light source as a start point and the target virtual scene point as an end point and a second sub-path with the target virtual scene point as a start point and the virtual camera as an end point in the virtual scene.

In some embodiments, the determining a first loss value of the virtual light source based on the total distance may be implemented in the following manner: obtaining a unit loss value of the light source light intensity of the virtual light source at a unit distance, and determining a product of the total distance and the unit loss value as the first loss value.

In some embodiments, the determining a second loss value of the virtual light source based on the target virtual scene point may be implemented in the following manner: obtaining an absorption rate of the target virtual scene point for the light source light intensity of the virtual light source, and determining a product of the absorption rate and the light source light intensity as the second loss value, the absorption rate being associated with a physical material indicated by the target virtual scene point.

In this way, the direct light intensity of the target virtual scene point is accurately determined by determining the loss value of the light source light intensity in the ray path, so that the target light information of the target virtual scene point is subsequently accurately determined with reference to the indirect light intensity. This effectively improves light accuracy of the virtual scene.

In some embodiments, the indirect light information includes indirect light intensity, and the obtaining indirect light information of the target virtual scene point may be implemented in the following manner: determining, from a plurality of light probes arranged in the virtual scene, at least one target light probe whose distance from the target virtual scene point is less than a distance threshold; and when one target light probe exists, determining light intensity stored in the target light probe as the indirect light intensity of the target virtual scene point; or when a plurality of target light probes exist, determining a weight of each target light probe based on a probe distance between each target light probe and the target virtual scene point; and performing, based on the weight, weighted summation on light intensity stored in all target light probes, to obtain the indirect light intensity of the target virtual scene point.

In some embodiments, the light probe is configured to store light intensity at a corresponding position in the virtual scene with changed content.

In some embodiments, the light probe stores "baking" information of light in the virtual scene, and a light map stores light information about a ray irradiating a surface of a virtual item in the virtual scene, but a light detector stores information about a ray passing through empty space in the virtual scene.

In some embodiments, a value of the probe distance is inversely proportional to a value of the weight of the target light probe. A larger probe distance corresponds to a smaller value of the weight of the target light probe. A smaller probe distance corresponds to a larger value of the weight of the target light probe. A sum of weights of all target light probes is equal to 1.

In an example, when a plurality of target light probes exist, for example, when a target light probe 1, a target light probe 2, and a target light probe 3 exist, a probe distance corresponding to the target light probe 1 is 3, a probe distance corresponding to the target light probe 2 is 4, a probe distance corresponding to the target light probe 3 is 5, a probe weight corresponding to the target light probe 1 is 0.2, a probe weight corresponding to the target light probe 2 is 0.3, and a probe weight corresponding to the target light probe 3 is 0.5.

In this way, at least one target light probe whose distance from the target virtual scene point is less than the distance threshold is determined from the plurality of light probes arranged in the virtual scene, a weight corresponding to each target light probe is determined, and weighted summation is performed, based on the weight, on light information stored in all target light probes, to obtain the indirect light intensity of the target virtual scene point. The light information stored in the target light probe can accurately indicate light information of a corresponding position in the virtual scene with changed content. In addition, the target light probe is close to the target virtual scene point, and therefore can more accurately indicate actual indirect light of the target virtual scene point. Moreover, weighted summation is performed on light information of a plurality of target light probes, to integrate the light information of the plurality of target light probes, so that the determined indirect light intensity can more accurately indicate indirect light in the virtual scene with changed content, and accuracy of the determined indirect light intensity is effectively improved.

In some embodiments, before the determining, from a plurality of light probes arranged in the virtual scene, at least one target light probe whose distance from the target virtual scene point is less than a distance threshold, light probes may be further arranged in the following manner: obtaining a camera position of the virtual camera in the virtual scene; determining a virtual scene region that is in the virtual scene and whose distance from the camera position is less than a distance threshold as a first virtual scene region, and determining a virtual scene region that is in the virtual scene and whose distance from the camera position is greater than or equal to the distance threshold as a second virtual scene region; and arranging a third quantity of light probes in the first virtual scene region, and arranging a fourth quantity of light probes in the second virtual scene region.

In some embodiments, the third quantity is greater than the fourth quantity, and the third quantity is an integer greater than or equal to 1.

In some embodiments, the distance threshold may be specifically set based on an actual situation, and the distance threshold is configured for dividing the virtual scene into at least two virtual scene regions.

In an example, 20 light probes are arranged in the first virtual scene region, and 15 light probes are arranged in the second virtual scene region.

In this way, because a quantity of virtual viewpoints (virtual scene points that can be captured by the virtual camera) in the first virtual scene region is greater than a quantity of virtual viewpoints in the second virtual scene region, arranging more light probes in the first virtual scene region can effectively ensure light accuracy of the first virtual scene region, and arranging a small quantity of light probes in the second virtual scene region can reduce a quantity of arranged light probes while ensuring light accuracy of the second virtual scene region. This effectively saves storage space, and effectively improves light update efficiency for the virtual scene.

Operation 1033: Perform weighted summation on all pieces of target light information to obtain updated light information.

In some embodiments, operation 1033 may be implemented in the following manner: performing the following processing on each piece of target light information: multiplying the target light information by a corresponding weight to obtain a light product result; and adding up light product results corresponding to all pieces of target light information, to obtain the updated light information.

Operation 1034: Update the light information carried in the to-be-updated voxel to the updated light information, to obtain the updated voxel corresponding to the to-be-updated voxel.

In some embodiments, operation 1034 may be implemented in the following manner: replacing the light information carried in the to-be-updated voxel with the updated light information, and determining a to-be-updated voxel obtained through replacement as the updated voxel corresponding to the to-be-updated voxel.

In this way, some initial voxels (to-be-updated voxels) of the virtual scene are updated to obtain updated voxels corresponding to the to-be-updated voxels, so that a quantity of to-be-updated voxels are effectively reduced, update costs are effectively reduced, and light update efficiency for the virtual scene can be effectively improved. In addition, indirect light information of the to-be-updated voxel can be accurately determined through arrangement of the light probes, direct light information of the to-be-updated voxel can be accurately determined through calculation of the loss value of the light source light intensity, and the direct light information and the indirect light information are summed, so that the obtained updated light information is more accurate, and accuracy of the determined updated light information is effectively improved.

Operation 104: Update light information of each virtual viewpoint in the virtual scene with changed content based on the updated voxel and an initial voxel among the plurality of initial voxels other than the to-be-updated voxel.

In some embodiments, the virtual viewpoint is a virtual scene point able to be captured by the virtual camera in the virtual scene with changed content. Here, the virtual scene point able to be captured by the virtual camera in the virtual scene with changed content refers to a virtual scene point that is within the field of view of the virtual camera. That is, there is no virtual occlusion between the virtual viewpoint and the virtual camera in the virtual scene with changed content.

In some embodiments, the updating light information of each virtual viewpoint in the virtual scene with changed content is a processing process of updating the light information of each virtual viewpoint in the virtual scene with changed content based on the updated light information of the updated voxel and light information of the initial voxel among the plurality of initial voxels other than the to-be-updated voxel.

In some embodiments, FIG. 6 is a schematic flowchart 4 of a light update method for a virtual scene according to an embodiment of the present disclosure. Operation 104 shown in FIG. 3 may be implemented by performing operation 1041 to operation 1043 shown in FIG. 6 on each virtual viewpoint in the virtual scene with changed content.

Operation 1041: Determine, from the updated voxel and the initial voxel other than the to-be-updated voxel, a target voxel in which the virtual viewpoint is located, and obtain light information of the target voxel.

In some embodiments, the determining, from the updated voxel and the initial voxel other than the to-be-updated voxel, a target voxel in which the virtual viewpoint is located may be implemented in the following manner: comparing a viewpoint position of the virtual viewpoint in the virtual scene with position ranges respectively corresponding to the updated voxel and the initial voxel other than the to-be-updated voxel, and determining, as the target voxel, a voxel corresponding to a position range within which the viewpoint position falls.

Operation 1042: Determine the light information of the target voxel as updated light information of the virtual viewpoint.

In some embodiments, operation 1042 may be implemented in the following manner: when the target voxel is the updated voxel, determining the updated light information of the updated voxel as the updated light information of the virtual viewpoint; or when the target voxel is the initial voxel other than the to-be-updated voxel, determining initial light information of the initial voxel as the updated light information of the virtual viewpoint.

Operation 1043: Update the light information of the virtual viewpoint to the updated light information of the virtual viewpoint.

In this way, a target voxel in which each virtual viewpoint is located is determined, and light information of the target voxel is determined as updated light information of the virtual viewpoint. When the target voxel is the to-be-updated voxel, because of accuracy of the updated light information of the to-be-updated voxel, the updated light information of the to-be-updated voxel is determined as the updated light information of the virtual viewpoint, so that the updated light information of the virtual viewpoint is more accurate.

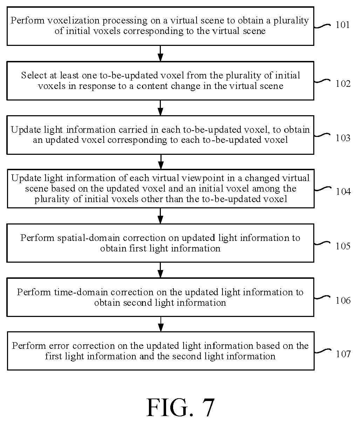

In some embodiments, FIG. 7 is a schematic flowchart 5 of a light update method for a virtual scene according to an embodiment of the present disclosure. After operation 104, the updated light information may be further corrected through operation 105 to operation 107 shown in FIG. 7.

Operation 105: Perform spatial-domain correction on the updated light information to obtain first light information.

In some embodiments, the spatial-domain correction is a processing process of performing error correction on the updated light information of the target voxel based on a voxel other than the target voxel corresponding to the virtual viewpoint in scene space of the virtual scene. Accuracy of the first light information is higher than accuracy of the updated light information.

In some embodiments, operation 105 may be implemented in the following manner: determining, from the updated voxel and the initial voxel other than the to-be-updated voxel, a target voxel in which the virtual viewpoint is located, and a plurality of adjacent voxels adjacent to the target voxel; selecting a target adjacent voxel from the plurality of adjacent voxels; obtaining light information of the target voxel and light information of each target adjacent voxel; and performing weighted summation on the light information of the target voxel and the light information of each target adjacent voxel, to obtain the first light information of the virtual viewpoint.

In some embodiments, a target voxel in which the virtual viewpoint is located and a plurality of adjacent voxels adjacent to the target voxel are determined from the updated voxel and the initial voxel other than the to-be-updated voxel.

In some embodiments, the determining, from the updated voxel and the initial voxel other than the to-be-updated voxel, a target voxel in which the virtual viewpoint is located may be implemented in the following manner: comparing a viewpoint position of the virtual viewpoint in the virtual scene with position ranges respectively corresponding to the updated voxel and the initial voxel other than the to-be-updated voxel, and determining, as the target voxel, a voxel corresponding to a position range within which a voxel position falls.

In some embodiments, the adjacent voxel is a voxel that has an adjacency relationship with the target voxel.

In some embodiments, a target adjacent voxel is selected from the plurality of adjacent voxels.

In some embodiments, the selecting a target adjacent voxel from the plurality of adjacent voxels may be implemented in the following manner: performing the following processing on each adjacent voxel: obtaining first occlusion information of the adjacent voxel and second occlusion information of the target voxel; and determining the adjacent voxel as the target adjacent voxel when the first occlusion information indicates that no virtual item exists between the adjacent voxel and the virtual camera and the second occlusion information indicates that no virtual item exists between the target voxel and the virtual camera; or performing an occlusion check on the adjacent voxel and the target voxel to obtain an occlusion check result when the first occlusion information indicates that a virtual item exists between the adjacent voxel and the virtual camera and the second occlusion information indicates that a virtual item exists between the target voxel and the virtual camera; and determining the adjacent voxel as the target adjacent voxel when the occlusion check result indicates that the adjacent voxel and the target voxel pass the occlusion check.

In some embodiments, the first occlusion information of the adjacent voxel indicates whether a virtual item exists between the adjacent voxel and the virtual camera, and the second occlusion information of the target voxel indicates whether a virtual item exists between the target voxel and the virtual camera.

In some embodiments, when the first occlusion information of the adjacent voxel indicates that no virtual item exists between the adjacent voxel and the virtual camera, no virtual occlusion exists between the adjacent voxel and the virtual camera. In this case, a virtual scene point in the adjacent voxel is more likely to be captured by the virtual camera (provided that a plurality of virtual scene points in the adjacent voxel include at least one virtual viewpoint). When the second occlusion information indicates that no virtual item exists between the target voxel and the virtual camera, no virtual occlusion exists between the target voxel and the virtual camera. In this case, a virtual scene point in the target voxel is more likely to be captured by the virtual camera (provided that a plurality of virtual scene points in the target voxel include at least one virtual viewpoint, to be specific, provided that the plurality of virtual scene points in the target voxel include at least one virtual scene point that can be irradiated by a direct ray or an indirect ray). Therefore, when the first occlusion information indicates that no virtual item exists between the adjacent voxel and the virtual camera and the second occlusion information indicates that no virtual item exists between the target voxel and the virtual camera, both the target voxel and the adjacent voxel corresponding to the target voxel are more likely to be captured by the virtual camera. In this case, the adjacent voxel may be determined as the target adjacent voxel.

In some embodiments, when the first occlusion information indicates that a virtual item exists between the adjacent voxel and the virtual camera and the second occlusion information indicates that a virtual item exists between the target voxel and the virtual camera, both the target voxel and the adjacent voxel corresponding to the target voxel are less likely to be captured by the virtual camera. In this case, an occlusion check needs to be performed on the adjacent voxel and the target voxel, and the adjacent voxel is determined as the target adjacent voxel when an occlusion check result indicates that the adjacent voxel and the target voxel pass the occlusion check.

In some embodiments, when the first occlusion information indicates that a virtual item exists between the adjacent voxel and the virtual camera or the second occlusion information indicates that a virtual item exists between the target voxel and the virtual camera, the adjacent voxel is determined as a non-adjacent voxel.

In this way, the target adjacent voxel is selected from the plurality of adjacent voxels adjacent to the target voxel, and spatial-domain correction is performed on the updated light information of the target voxel based on the target adjacent voxel, so that the obtained first light information is more accurate, and the updated light information of the virtual viewpoint is more accurate.

In some embodiments, the performing an occlusion check on the adjacent voxel and the target voxel to obtain an occlusion check result may be implemented in the following manner: obtaining a first distance between the adjacent voxel and the corresponding virtual item, and a second distance between the target voxel and the corresponding virtual item; performing a first occlusion check on the adjacent voxel and the target voxel based on the first distance and the second distance, to obtain a first occlusion check result; and determining the occlusion check result as a first result when the first occlusion check result indicates that the adjacent voxel and the target voxel pass the first occlusion check; or when the first occlusion check result indicates that the adjacent voxel and the target voxel fail the first occlusion check, obtaining a third distance between the adjacent voxel and the target voxel, and performing a second occlusion check on the adjacent voxel and the target voxel based on the second distance and the third distance, to obtain a second occlusion check result; and determining the occlusion check result as a first result when the second occlusion check result indicates that the adjacent voxel and the target voxel pass the second occlusion check; or determining the occlusion check result as a second result when the second occlusion check result indicates that the adjacent voxel and the target voxel fail the second occlusion check.

In some embodiments, the first result indicates that the adjacent voxel and the target voxel pass the occlusion check, and the second result indicates that the adjacent voxel and the target voxel fail the occlusion check.

In some embodiments, when the first occlusion information indicates that a virtual item exists between the adjacent voxel and the virtual camera and the second occlusion information indicates that a virtual item exists between the target voxel and the virtual camera, two occlusion checks (the first occlusion check and the second occlusion check) are performed based on distances between the adjacent voxel, the virtual item corresponding to the adjacent voxel, the target voxel, and the virtual item corresponding to the target voxel, to accurately determine whether the adjacent voxel is to be determined as the target adjacent voxel.

In some embodiments, when the first occlusion check result indicates that the adjacent voxel and the target voxel fail the first occlusion check, the adjacent voxel cannot be determined as the target adjacent voxel. In this case, the second occlusion check further needs to be performed on the adjacent voxel and the target voxel, and the adjacent voxel can be determined as the target adjacent voxel only when the adjacent voxel and the target voxel pass the second occlusion check.

In some embodiments, the performing a first occlusion check on the adjacent voxel and the target voxel based on the first distance and the second distance, to obtain a first occlusion check result may be implemented in the following manner: comparing the first distance with the second distance to obtain a first comparison result; and determining the first occlusion check result as a third result when the first comparison result indicates that the first distance is less than or equal to the second distance and a dot product of a direction vector from the virtual viewpoint to a voxel center point of the target voxel and a direction vector from the target voxel to the corresponding virtual item is less than a dot product threshold.

In some embodiments, the third result indicates that the adjacent voxel and the target voxel pass the first occlusion check.

In some embodiments, the first occlusion check result is determined as a fifth result when the first comparison result indicates that the first distance is greater than the second distance or a dot product of a direction vector from the virtual viewpoint to a voxel center point of the target voxel and a direction vector from the target voxel to the corresponding virtual item is greater than or equal to a dot product threshold.

In some embodiments, the fifth result indicates that the adjacent voxel and the target voxel fail the first occlusion check.

In some embodiments, when the first comparison result indicates that the first distance is less than or equal to the second distance, a distance between the target voxel and the corresponding virtual item is shorter than a distance between the adjacent voxel and the corresponding virtual item. A shorter distance between a voxel and a corresponding virtual item indicates that more virtual scene points in the voxel are occluded by the virtual item, in other words, a proportion of virtual scene points in the voxel being occluded is higher. The proportion of virtual scene points in the voxel being occluded is directly proportional to a distance between the voxel and the corresponding virtual item. In this case, because a quantity of occluded virtual scene points in the target voxel is greater than a quantity of occluded virtual scene points in the adjacent voxel, light information of the adjacent voxel has great reference value for the updated light information of the target voxel, and spatial-domain correction may be performed on the updated light information of the target voxel based on the light information of the adjacent voxel, in other words, the adjacent voxel may be determined as the target adjacent voxel.

In some embodiments, when the first comparison result indicates that the first distance is less than or equal to the second distance, whether to determine the adjacent voxel as the target adjacent voxel may be further determined based on whether the dot product of the direction vector from the virtual viewpoint to the voxel center point of the target voxel and the direction vector from the target voxel to the corresponding virtual item is less than the dot product threshold.

In some embodiments, when the dot product of the direction vector from the virtual viewpoint to the voxel center point of the target voxel and the direction vector from the target voxel to the corresponding virtual item is less than the dot product threshold, an included angle between the two direction vectors is small, and occlusion is more likely to occur. In this case, the adjacent voxel may be determined as the target adjacent voxel.

In this way, the first occlusion check is performed on the adjacent voxel and the target voxel to obtain the first occlusion check result, and the adjacent voxel is determined as the target adjacent voxel when the first occlusion check result indicates that the target voxel and the adjacent voxel pass the first occlusion check, so that the target adjacent voxel is determined based on a contribution of the light information of the adjacent voxel to accuracy of the target voxel. Spatial-domain correction is performed on the updated light information of the target voxel based on the target adjacent voxel, so that the obtained first light information is more accurate, and the updated light information of the virtual viewpoint is more accurate.

In some embodiments, the performing a second occlusion check on the adjacent voxel and the target voxel based on the second distance and the third distance, to obtain a second occlusion check result may be implemented in the following manner: comparing the second distance with the third distance to obtain a second comparison result; and determining the second occlusion check result as a fourth result when the second comparison result indicates that the second distance is greater than the third distance.

In some embodiments, the fourth result indicates that the adjacent voxel and the target voxel pass the second occlusion check.

In some embodiments, the third distance between the adjacent voxel and the target voxel indicates a distance between a voxel center point of the adjacent voxel and the voxel center point of the target voxel.

In some embodiments, when the second distance between the target voxel and the corresponding virtual item is greater than the third distance between the adjacent voxel and the target voxel, the second distance between the target voxel and the corresponding virtual item is longer than the third distance between the adjacent voxel and the target voxel, and a contribution of the adjacent voxel to light of the target voxel is greater than a contribution of the virtual item to light of the target voxel. In this case, the second occlusion check result may be determined as the fourth result. The fourth result indicates that the adjacent voxel and the target voxel pass the second occlusion check, in other words, the adjacent voxel may be determined as the target adjacent voxel.

In this way, the first occlusion check is performed on the adjacent voxel and the target voxel to obtain the first occlusion check result, and the second occlusion check is further performed when the first occlusion check result indicates that the target voxel and the adjacent voxel fail the first occlusion check, so that the target adjacent voxel is determined based on a contribution of the light information of the adjacent voxel to accuracy of the target voxel. Spatial-domain correction is performed on the updated light information of the target voxel based on the target adjacent voxel, so that the obtained first light information is more accurate, and the updated light information of the virtual viewpoint is more accurate.

In some embodiments, light information of the target voxel and light information of each target adjacent voxel are obtained.

In an example, light information respectively corresponding to a target adjacent voxel 1, a target adjacent voxel 2, a target adjacent voxel 3, and a target adjacent voxel 4 of the target voxel is obtained.

In some embodiments, weighted summation is performed on the light information of the target voxel and the light information of each target adjacent voxel, to obtain the first light information of the virtual viewpoint.

In some embodiments, weights respectively corresponding to the light information of the target voxel and the light information of each target adjacent voxel may be set based on an actual situation. For example, a weight of the light information of the target voxel is greater than a weight of the light information of each target adjacent voxel, and weights of light information of all target adjacent voxels are equal.

Operation 106: Perform time-domain correction on the updated light information to obtain second light information.

In some embodiments, the time-domain correction is a processing process of performing error correction on the updated light information of the target voxel based on light information of a plurality of historical voxels of a pixel corresponding to the virtual viewpoint in a historical update process. Accuracy of the second light information is higher than accuracy of the updated light information.

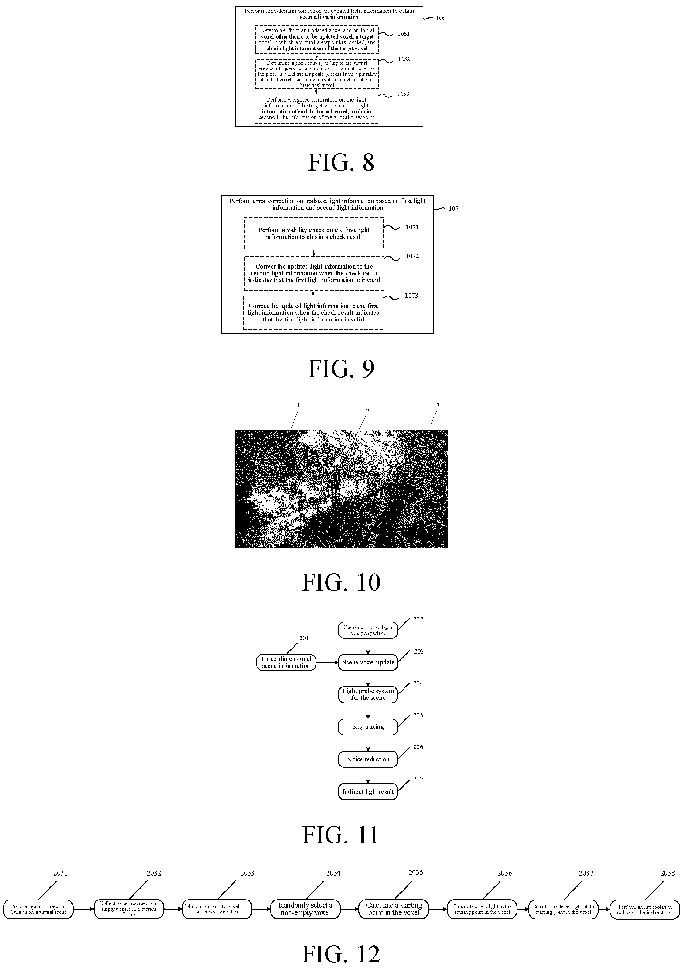

In some embodiments, FIG. 8 is a schematic flowchart 6 of a light update method for a virtual scene according to an embodiment of the present disclosure. Operation 106 shown in FIG. 7 may be implemented by performing operation 1061 to operation 1063 shown in FIG. 8.

Operation 1061: Determine, from the updated voxel and the initial voxel other than the to-be-updated voxel, a target voxel in which the virtual viewpoint is located, and obtain light information of the target voxel.

In some embodiments, the determining, from the updated voxel and the initial voxel other than the to-be-updated voxel, a target voxel in which the virtual viewpoint is located may be implemented in the following manner: comparing a viewpoint position of the virtual viewpoint in the virtual scene with position ranges respectively corresponding to the updated voxel and the initial voxel other than the to-be-updated voxel, and determining, as the target voxel, a voxel corresponding to a position range within which a voxel position falls.

Operation 1062: Determine a pixel corresponding to the virtual viewpoint, query for a plurality of historical voxels of the pixel in a historical update process from the plurality of initial voxels, and obtain light information of each historical voxel.

In some embodiments, the pixel corresponding to the virtual viewpoint is a pixel corresponding to the virtual viewpoint on an imaging plane of the virtual camera, the virtual viewpoint is in a one-to-one correspondence with the pixel on the imaging plane of the virtual camera, and one virtual viewpoint in the virtual scene corresponds to one pixel on the imaging plane of the virtual camera in the virtual scene.

In some embodiments, a quantity of historical voxels is equal to a quantity of content updates in the virtual scene.

In an example, content of the virtual scene is updated five times within 10 seconds. Specifically, an update is performed at the first second, an update is performed at the third second, an update is performed at the fifth second, an update is performed at the seventh second, and an update is performed at the ninth second. A historical voxel corresponding to the pixel in a historical update (each update) process is queried, and light information of each historical voxel is obtained.

Operation 1063: Perform weighted summation on the light information of the target voxel and the light information of each historical voxel, to obtain the second light information of the virtual viewpoint.

In some embodiments, a content update in the virtual scene causes a change in a voxel corresponding to the pixel. One content update in the virtual scene causes one change in the voxel corresponding to the pixel. A content update in the virtual scene changes with time. For example, content of the virtual scene is updated five times within 10 seconds, and each content update causes one change in the voxel corresponding to the pixel. In this case, a plurality of initial voxels (historical voxels) corresponding to the pixel in a historical update (each update) process may be queried from the plurality of initial voxels, and weighted summation is performed on the light information of the target voxel and the light information of each historical voxel, to obtain the second light information of the virtual viewpoint. In this way, the updated light information is corrected within a time span (time domain) of a content update process.

In an example, content of the virtual scene is updated five times within 10 seconds. Specifically, an update is performed at the first second, an update is performed at the third second, an update is performed at the fifth second, an update is performed at the seventh second, and an update is performed at the ninth second. Weighted summation is performed on the light information of the target voxel and the light information of each historical voxel, to obtain the second light information of the virtual viewpoint.

In this way, the pixel corresponding to the virtual viewpoint is determined, the plurality of historical voxels of the pixel in the historical update process are queried from the plurality of initial voxels, and time-domain correction is performed on the updated light information based on a historical voxel corresponding to each update within a time-domain range of updates, to obtain the second light information, so that an error of the updated light information is effectively corrected, the obtained second light information is more accurate, and the updated light information of the virtual viewpoint is more accurate.

Operation 107: Perform error correction on the updated light information based on the first light information and the second light information.

In some embodiments, accuracy of the second light information is higher than accuracy of the updated light information, and accuracy of the first light information is higher than accuracy of the updated light information. The first light information mainly eliminates a spatial-domain error of the updated light information, and the second light information mainly eliminates a time-domain error of the updated light information. Error correction is performed on the updated light information based on the first light information and the second light information. In this way, obtained error-corrected updated light information not only can eliminate the spatial-domain error of the updated light information, but also can eliminate the time-domain error of the updated light information, so that the error-corrected updated light information is more accurate.

In some embodiments, FIG. 9 is a schematic flowchart 7 of a light update method for a virtual scene according to an embodiment of the present disclosure. Operation 107 shown in FIG. 7 may be implemented by performing operation 1071 to operation 1073 shown in FIG. 9.

Operation 1071: Perform a validity check on the first light information to obtain a check result.

In some embodiments, the validity check is a processing process of checking validity of the first light information, and the check result indicates whether the first light information is valid.

In some embodiments, operation 1071 may be implemented in the following manner: determining, from the updated voxel and the initial voxel other than the to-be-updated voxel, a target voxel in which the virtual viewpoint is located; constructing a check ray by using the target voxel as a start point and the virtual camera as an end point in the virtual scene with changed content; and determining the check result as a first check result when the check ray intersects with a virtual item in the virtual scene with changed content; or determining the check result as a second check result when the check ray does not intersect with a virtual item in the virtual scene with changed content.

In some embodiments, the first check result indicates that the first light information is invalid, and the second check result indicates that the first light information is valid.

In some embodiments, the determining, from the updated voxel and the initial voxel other than the to-be-updated voxel, a target voxel in which the virtual viewpoint is located may be implemented in the following manner: comparing a viewpoint position of the virtual viewpoint in the virtual scene with position ranges respectively corresponding to the updated voxel and the initial voxel other than the to-be-updated voxel, and determining, as the target voxel, a voxel corresponding to a position range within which a voxel position falls.

In some embodiments, when the check ray intersects with the virtual item in the virtual scene with changed content, there is a possibility that the target voxel is occluded by the virtual item, and the first light information may be determined as invalid; or when the check ray does not intersect with the virtual item in the virtual scene with changed content, there is a possibility that the target voxel is not occluded by the virtual item, and the first light information may be determined as valid.

Operation 1072: Correct the updated light information to the second light information when the check result indicates that the first light information is invalid.

In some embodiments, the updated light information may be corrected to the second light information when the check result corresponding to the first light information indicates that the first light information is invalid.

Operation 1073: Correct the updated light information to the first light information when the check result indicates that the first light information is valid.

In some embodiments, the updated light information may be corrected to the first light information when the check result corresponding to the first light information indicates that the first light information is valid.

In this way, accuracy of the second light information is higher than accuracy of the updated light information, and accuracy of the first light information is higher than accuracy of the updated light information. The first light information mainly eliminates a spatial-domain error of the updated light information, and the second light information mainly eliminates a time-domain error of the updated light information. Error correction is performed on the updated light information based on the first light information and the second light information. In this way, obtained error-corrected updated light information not only can eliminate the spatial-domain error of the updated light information, but also can eliminate the time-domain error of the updated light information, so that the error-corrected updated light information is more accurate.

In some embodiments, after operation 104, target light information of the pixel may be further determined in the following manner: performing the following processing on each virtual viewpoint in the virtual scene with changed content: obtaining a pixel corresponding to the virtual viewpoint on an imaging plane of the virtual camera; determining a viewpoint distance between the virtual camera and the virtual viewpoint, and determining initial light information of the pixel based on the viewpoint distance and the updated light information of the virtual viewpoint; determining, from a plurality of screen probes arranged on the imaging plane, at least one target screen probe whose distance from the pixel is less than a distance threshold; and performing weighted summation on light information stored in each target screen probe and the initial light information of the pixel, to obtain target light information of the pixel.

In some embodiments, the target light information of the pixel is configured for performing picture rendering on the imaging plane of the virtual camera.

In some embodiments, the screen probe is configured to store light information of a corresponding position on the imaging plane.

In some embodiments, the viewpoint distance between the virtual camera and the virtual viewpoint may be determined by using a distance calculation method such as a Euclidean distance, a Manhattan distance, or a Chebyshev distance. A specific calculation method for the viewpoint distance is not limited. The viewpoint distance indicates a distance between the virtual camera and the virtual viewpoint.

In some embodiments, a Euclidean metric (also referred to as a Euclidean distance) is a commonly used distance definition, and is a true distance between two points in m-dimensional space, or a natural length of a vector (to be specific, a distance from the point to an origin). A Euclidean distance in two-dimensional space and three-dimensional space is an actual distance between two points. The Manhattan distance is a geometric term used in geometric metric space, and indicates a sum of absolute axial distances between two points in a standard coordinate system.

In some embodiments, weights respectively corresponding to the light information stored in each target screen probe and the initial light information of the pixel may be specifically set based on an actual situation, and a sum of weights respectively corresponding to light information stored in all target screen probes and the initial light information of the pixel is equal to 1.

In this way, voxelization processing is performed on a virtual scene to obtain a plurality of initial voxels corresponding to the virtual scene, at least one to-be-updated voxel is selected from the plurality of initial voxels in response to a content change in the virtual scene, light information carried in each to-be-updated voxel is updated, and light information of each virtual viewpoint in a changed virtual scene is updated based on the updated voxel and an initial voxel among the plurality of initial voxels other than the to-be-updated voxel. In this way, at least one to-be-updated voxel is selected from the plurality of initial voxels in response to the content change in the virtual scene, and the quantity of to-be-updated voxels is less than the quantity of initial voxels. Because the quantity of to-be-updated voxels is less than the quantity of initial voxels, the quantity of to-be-updated voxels is effectively reduced, so that update costs are effectively reduced, and light update efficiency for the virtual scene can be effectively improved.

The following describes exemplary application of embodiments of the present disclosure in an actual application scenario of an online game.

Embodiments of the present disclosure can be applied to any project and product that require real-time global illumination calculation, including games and three-dimensional visual designs, and can provide high-quality and realistic light rendering effects and significantly improve a visual manifestation capability of the product, to further improve user experience. In a typical application scenario such as a game, in embodiments of the present disclosure, an indirect light result of each pixel on a screen may be automatically calculated in real time based on placement positions and parameters of items and light in a game scene, to improve light details and vividness of a game picture.

In some embodiments, FIG. 10 is a schematic diagram of a rendering effect of a light update method for a virtual scene according to an embodiment of the present disclosure. In this embodiment of the present disclosure, an indirect light result of each pixel (for example, a pixel 1, a pixel 2, and a pixel 3) on a screen may be automatically calculated in real time based on placement positions and parameters of items and light in a game scene, to improve light details and vividness of a game picture.

In some embodiments, FIG. 11 is a schematic flowchart 8 of a light update method for a virtual scene according to an embodiment of the present disclosure. The light update method for a virtual scene provided in this embodiment of the present disclosure may be implemented through operation 201 to operation 207 shown in FIG. 11.

Operation 201: Obtain three-dimensional scene information of a virtual scene.

Operation 202: Obtain a scene color and depth of a perspective.

In some embodiments, an obtained initial input is color and depth information obtained by rendering the virtual scene at a current perspective, and a voxel in world space is updated based on a three-dimensional structure of the virtual scene, such as an item posture and material, and a light source parameter. A voxel is used as a basic structure of a light buffer system, and voxel data is continuously updated to adapt to a dynamic change in the virtual scene and calculate indirect light transmission.

Operation 203: Update a scene voxel.

In some embodiments, operation 203 may be implemented in the following manner: updating the scene voxel based on the three-dimensional scene information of the virtual scene and the scene color and depth of the perspective.

In some embodiments, a voxel carrying normal line information is configured for representing a surface element in this embodiment of the present disclosure, to simplify description of a three-dimensional scene. First, cuboid space with a camera as a center is maintained, and a voxel is configured for simplifying description of three-dimensional scene information in the space. Content of the voxel includes a normal line, a diffuse reflection color, direct light information, radiance information, and the like. To reduce memory consumption, in this embodiment of the present disclosure, voxels are sparsely stored in a hierarchical manner, and $4\times4\times4$ voxels are considered as a group, which is referred to as a brick. A hierarchical index is represented by an $n\times m\times k$ three-dimensional map. If a brick includes a voxel, an actual storage position of the voxel may be obtained based on the hierarchical index. If a value obtained based on the hierarchical index is 0, the brick does not include a voxel. In this way, memory space can be greatly saved.

In this embodiment of the present disclosure, the scene voxel update (operation 203 shown in FIG. 11) includes a voxel creation part and a voxel update part. In the voxel creation part, a three-dimensional item in a scene is first converted into voxel information. This process is referred to as scene voxelization. In this embodiment of the present disclosure, scene voxelization is performed in two parts. One part is performed based on a screen: screen voxel injection. The other part is performed based on a three-dimensional model: single-model voxelization. On a mobile terminal, the voxel update part is completed through screen voxel injection. On a PC or a host, the voxel update part is further completed through a light transmission update in addition to screen voxel injection.

In some embodiments, the screen voxel injection is usually performed by using a scene color map and a scene depth map. World coordinates of a pixel are calculated by using the depth map. Then information, such as a scene color and a diffuse reflection color, is recorded at a corresponding voxel position. Embodiments of the present disclosure provide an optimized screen voxel injection solution, to improve performance and accuracy of screen voxel injection. A process is divided into three parts:

A first part is group frustum culling: First, $8\times8\times8$ bricks are considered as a group, and an intersection between each group and a view frustum is calculated in a GPU. A group that does not intersect with the view frustum is discarded. A group intersecting with the view frustum may be updated by frame based on a distance between the group and a camera. Update frequency of a group close to the camera is high, and update frequency of a group far away from the camera is low. A quantity of voxels that need to be updated is greatly reduced through group culling.

A second part is brick collection: Brick collection is performed on a group that needs to be updated in a current frame. In this process, whether a brick intersects with a screen depth is determined. If the brick intersects with the screen depth, the brick is collected for subsequent voxel injection; otherwise, the brick is not collected. In addition, all bricks in front of a scene depth are collected every 10 frames to complete a voxel clearing operation. Embodiments of the present disclosure provide a new "eight-vertex test method" herein. Whether a cuboid intersects with a scene depth is tested by determining, through comparison, a front-back relationship between eight vertexes of the cuboid and the scene depth. If some of the eight vertexes are located in front of the scene depth and some vertexes are located after the scene depth, it is determined that the cuboid intersects with the scene depth. In addition, for ease of determining, if any one of the eight vertexes is quite close to the scene depth, it is determined that the cuboid intersects with the scene depth.

A third part is voxel injection: A thread is created for each voxel of a collected brick. First, a three-dimensional point is randomly selected from the voxel. A screen depth is obtained based on a projection of the point in a camera coordinate system. If world coordinates corresponding to the screen depth are quite close to the point, the voxel is updated by using a screen color corresponding to the point. If the world coordinates are far away from the point, the sampling point is invalid, and enters a clearing stage. Two conditions need to be met for clearing a voxel. If it is determined, by using the "eight-vertex test method", that a voxel does not intersect with the scene depth, and a voxel depth is in front of the screen depth, the corresponding voxel is cleared.

In some embodiments, in single-model voxelization, a three-dimensional model in a scene is transmitted to a GPU, and model voxelization is completed through hardware rasterization. A model projection solution needs to be set to orthogonal projection. In addition, a depth test is closed, and instance drawing is simultaneously performed on an x-axis, a y-axis, and a z-axis in one drawing call pass. Because a PC solution includes a subsequent voxel light update solution, only a diffuse reflection color and a normal line of a voxel are written in the single-model voxelization stage. However, in a mobile terminal solution, for consideration of performance, no light transmission is performed for a voxel; instead, light for a voxel is updated through screen voxel injection, to be specific, operations shown in FIG. 12. Therefore, simplified direct light is implemented in the single-model voxelization stage.

In some embodiments, FIG. 12 is a schematic flowchart of a light update method for a virtual scene according to an embodiment of the present disclosure. Operation 203 may be implemented through operation 2031 to operation 2038 shown in FIG. 12.

Operation 2031: Perform spatial-temporal division on a virtual scene.

In some embodiments, a voxel light transmission update is mainly configured for updating and calculating direct light and indirect light in each voxel, so that a light buffer structure of a system can adapt to a dynamic changes in a scene. However, because a large quantity of voxels exist in a scene, it is difficult to complete a light update within limited time. Therefore, an update operation is performed only on some voxels in each frame.

In some embodiments, space division and time division first need to be performed on all voxel brick structures in a scene. In space, a scene is divided into the following two parts based on a specific threshold by using a game player or a camera as an origin: a short distance and a long distance. For example, space within a length of 300 meters, a width of 300 meters, and a height of 150 meters is the short distance, and the rest is the long distance.

Operation 2023: Collect to-be-updated non-empty voxels in a current frame.

In some embodiments, all voxel brick structures in the short-distance space and the long-distance space are separately allocated to a plurality of game frames for light updates. The short-distance space is divided into nine game frames, and the long-distance space is divided into 121 game frames. Then non-empty voxel brick structures are collected for all voxel brick structures allocated to the current frame. To be specific, light of voxels in the voxel brick structures needs to be calculated. Then non-empty voxels in each voxel brick structure are marked. For example, 64 bits may be used to mark whether 64 voxels are in an empty state. Finally, uniform sampling and random extraction are performed on non-empty voxels in a voxel brick structure, and only some non-empty voxels are updated. For example, at most 16 non-empty voxels may be randomly updated. Due to impact of the random policy, all non-empty voxels in the voxel brick structure are updated after a plurality of frames elapse.

Operation 2033: Mark a non-empty voxel in a non-empty voxel brick.

Operation 2034: Randomly select a non-empty voxel.

Operation 2035: Calculate a starting point in the voxel.

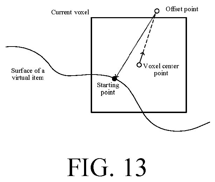

In some embodiments, FIG. 13 is a schematic diagram of a principle of a starting point according to an embodiment of the present disclosure. A square block represents a current voxel, and a curve represents a surface of a virtual item covered by the current voxel. A voxel center point is offset beyond the current voxel along a direction of a normal line of the current voxel, to obtain an offset point. With the offset point as a start point, a ray is emitted within a specific included angle range in a negative direction of the normal line of the current voxel. An intersection solved through ray tracing is the starting point.

Operation 2036: Calculate direct light at a position of the starting point in the voxel.

Operation 2037: Calculate indirect light at the position of the starting point in the voxel.

In some embodiments, the indirect light at the position of the starting point in the voxel further needs to be calculated, a specific quantity of rays are randomly sampled on a hemispherical surface in a normal direction of the starting point, and current indirect light of the voxel may be obtained by using an importance sampling or resampling technology.

Operation 2038: Perform an interpolation update on the indirect light.

In some embodiments, interpolation and blending are performed on a current indirect light calculation result and a result of a previous frame. For example, three rays may be uniformly sampled on a hemispherical surface in a normal direction of a voxel starting point in the current voxel, and light of the three rays is separately calculated through ray tracing. Then current indirect light is calculated through resampling. Nine frames are accumulated in time domain. To be specific, an interpolation weight is 1/9.

Operation 204: Generate a light probe system for the scene.

In some embodiments, the light probe system for the scene is generated based on a voxel structure, and is configured to perform subsequent indirect light calculation.

In this embodiment of the present disclosure, indirect light information of the scene is buffered by using three-dimensional probes in world space. The three-dimensional probes in this embodiment of the present disclosure also store two parts: indirect light information and visibility information. In this embodiment of the present disclosure, the indirect light information is stored in different formats based on platforms: On a PC, radiance information is stored by using an octahedral map. On a mobile terminal, radiance information is stored by using an ambient cube. For the visibility information, in this embodiment of the present disclosure, a variance shadow map (VSM) distance, to be specific, an average distance from closest items in all surrounding directions and a square of the average distance, is stored by using an octahedral map, and the VSM is configured for subsequently calculating visibility. The three-dimensional probes are uniformly distributed in a cuboid centered on a camera and are implemented in a nested hierarchy. Some probes close to the camera have high density, and some probes far away from the camera have low density.

In this embodiment of the present disclosure, a layer is selected in each frame to update a three-dimensional probe. In an update process, a probe that needs to be updated is first collected, and a determining condition is that a valid voxel exists within a specific range around the probe. This collection solution avoids a full probe update, and can reduce a large amount of performance consumption.

For each to-be-updated three-dimensional probe, a direction of a ray is first randomly selected from a spherical surface, and a probe surface that needs to be updated is determined based on the direction of the ray. If a mobile terminal is used, a surface that needs to be updated is first randomly selected, and then a direction of a ray is randomly selected by using cosine of an included angle of a normal line as an update probability. A start point of the ray is a center of the probe, and a voxel at an intersection position may be obtained by using a ray tracing algorithm. In a mobile terminal solution, the ray tracing algorithm is implemented through software-based voxel tracing. An implementation solution is to store occupation information of a next-level node in a hierarchical manner. A voxel is located at a bottom layer. Information indicating whether $4 \times 4 \times 4$ next-level nodes are occupied is stored by using 64 bits in each previous-level node. Then the ray tracing algorithm is implemented by using a hierarchical digital differential analyzer (HDDA). In a PC solution, different solutions such as hardware-based ray tracing may alternatively be selected. If no voxel intersects with the probe within a quite long range, probe surface content, such as irradiance and unit radiant intensity, is updated by using daylight, and a VSM distance is updated. If a voxel intersects with a front surface, a probe surface is updated by using a voxel color, and a VSM distance is updated. If a voxel intersects with a rear surface, only a VSM distance is updated, and no color is updated. To avoid light leakage or shadow leakage caused by a probe in an item structure or a voxel, this embodiment of the present disclosure also provides a probe relocation function. Based on this, a position is quantized, and the position and transition information are stored, to ensure a smooth and natural relocation process. After the relocation, a color of the probe is reset, to prevent light leakage or shadow leakage.

Operation 205: Perform ray tracing.

In some embodiments, the ray tracing is configured for: for a world space position corresponding to each pixel on a screen, emitting a ray on a hemispherical surface of the pixel, obtaining intersection information, and solving an initial indirect light result by using the intersection information.

In some embodiments, an indirect light result at each pixel position may be obtained through calculation by a ray tracing module, and the indirect light result is a noisy indirect light result before being processed by a noise reduction module. For example, when RTX hardware-based ray tracing is used, for each pixel on the screen, sampling is performed based on a material of the pixel at a world space position corresponding to the pixel, to generate an initial ray, then ray tracing is performed to obtain intersection information, and then a light result is obtained from a corresponding scene voxel structure.

Operation 206: Perform noise reduction.

In some embodiments, an initial light result is full of noise, and enters a noise reduction module. The module performs noise elimination by using a related spatial-temporal algorithm, to generate a smooth and stable indirect light calculation result. Light rendering quality of an application project or product may be greatly improved by using the result, to provide a realistic visual effect.

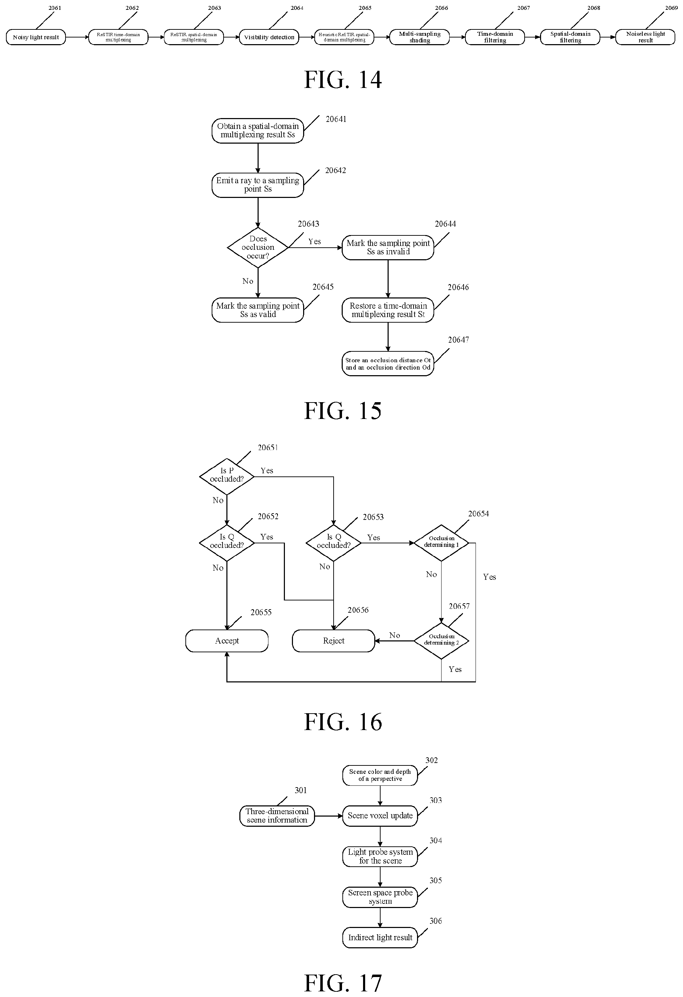

In some embodiments, FIG. 14 is a schematic flowchart 10 of a light update method for a virtual scene according to an embodiment of the present disclosure. Operation 206 shown in FIG. 11 may be implemented through operation 2061 to operation 2069 shown in FIG. 14.

Operation 2061: Obtain a noisy light result.

Operation 2062: Perform ReSTIR time-domain multiplexing.

In some embodiments, for an inputted noisy indirect light result, general ReSTIR time-domain multiplexing and spatial-domain multiplexing are first performed to preliminarily reduce noise. To reduce a calculation amount to meet a requirement for real-time operation, in this embodiment of the present disclosure, no visibility check operation is performed for ray tracing in these two operations. If no visibility check operation is performed, a large quantity of deviations are introduced, and compared with a physically correct reference standard, an outputted indirect light result is specifically manifested as a loss of high-frequency details of indirect light, a loss of a shadow of indirect light, a reduction in overall contrast of a picture, and a loss of a three-dimensional sense of light. In addition, a small deviation amount is introduced by the time-domain multiplexing, and a large deviation amount is introduced by the spatial-domain multiplexing.

A simple exemplary process is as follows: A noisy light result has been calculated for each pixel on the screen, and an initial sampling point So obtained by the ray tracing module for the pixel is stored. After a time-domain multiplexing operation is performed, a sampling point St having a maximum contribution to a current pixel is selected based on sampling information of a historical frame before the pixel. After a spatial-domain multiplexing operation is performed, a sampling point Ss having a maximum contribution to the current pixel is selected based on sampling information of other pixels around the pixel. An indirect light result of the pixel may be solved based on the sampling points.

Operation 2063: Perform ReSTIR spatial-domain multiplexing.

In some embodiments, a noisy light result has been calculated for each pixel on the screen, and an initial sampling point So obtained by the ray tracing module for the pixel is stored. After a time-domain multiplexing operation is performed, a sampling point St having a maximum contribution to a current pixel is selected based on sampling information of a historical frame before the pixel. After a spatial-domain multiplexing operation is performed, a sampling point Ss having a maximum contribution to the current pixel is selected based on sampling information of other pixels around the pixel. An indirect light result of the pixel may be solved based on the sampling points.

Operation 2064: Perform visibility detection.

In some embodiments, FIG. 15 is a schematic flowchart 11 of a light update method for a virtual scene according to an embodiment of the present disclosure. Operation 2064 shown in FIG. 14 may be implemented through operation 20641 to operation 20647 shown in FIG. 15.

Operation 20641: Obtain a spatial-domain multiplexing result Ss.

In some embodiments, an obtained input is a result sampling point Ss, obtained through spatial-domain multiplexing, of a current pixel.

Operation 20642: Emit a ray to the sampling point Ss.

In some embodiments, to determine whether Ss is visible to the current pixel, a ray is emitted from a world space position corresponding to the current pixel to the sampling point Ss, and whether the visible ray is occluded is determined through ray tracing.

Operation 20643: Determine whether the visible ray is occluded.

In some embodiments, whether the visible ray is occluded may be determined through ray tracing.

Operation 20644: Mark the sampling point Ss as invalid when the visible ray is occluded.

In some embodiments, if the visible ray is occluded, a ray emitted by the sampling point Ss cannot reach the current pixel, and the sampling point Ss is marked as invalid. This indicates that the spatial-domain multiplexing result has a quite large deviation. To reduce the deviation, the spatial-domain multiplexing result Ss is restored to a time-domain multiplexing result St, and the time-domain multiplexing result St has a small deviation. In addition, an occlusion distance Ot and an occlusion direction Od of Ss are recorded.

Operation 20645: Mark the sampling point Ss as valid when the visible ray is not occluded.

In some embodiments, if the visible ray is not occluded, the sampling point Ss is marked as valid. This indicates that the spatial-domain multiplexing result does not have a large deviation.

Operation 20646: Restore the time-domain multiplexing result St.

In some embodiments, to reduce the deviation, the spatial-domain multiplexing result Ss is restored to the time-domain multiplexing result St, and the time-domain multiplexing result St has a small deviation.

Operation 20647: Store the occlusion distance Ot and the occlusion direction Od.

In some embodiments, the occlusion distance Ot and the occlusion direction Od of Ss may be recorded.

Operation 2065: Perform heuristic ReSTIR spatial-domain multiplexing.

In some embodiments, a spatial-domain multiplexing result with a large deviation is detected and is restored to a time-domain multiplexing result in this embodiment of the present disclosure. However, compared with spatial-domain multiplexing, the time-domain multiplexing result has large noise. To further eliminate the noise, in this embodiment of the present disclosure, heuristic spatial-domain multiplexing is performed again based on a result of a visibility check module. This operation does not include an additional visibility check operation for ray tracing. Compared with the simple spatial-domain multiplexing in 2063, high-frequency details of indirect light can be retained, to greatly improve quality of the indirect light and make the indirect light closer to a physically correct reference result. In an original spatial-domain multiplexing process, filtering is performed based on a difference between a current pixel and a neighborhood pixel in terms of geometrical parameters such as a depth value and a normal value, but it is still difficult to retain high-frequency details of indirect light.

In some embodiments, the first occlusion information described above is occlusion determining 1 described below.

In some embodiments, the second occlusion information described above is occlusion determining 2 described below.

In some embodiments, FIG. 16 is a schematic flowchart 12 of a light update method for a virtual scene according to an embodiment of the present disclosure. A center point pixel is denoted as P, and a neighborhood pixel for spatial multiplexing is denoted as Q. Heuristic spatial-domain multiplexing, namely, operation 2065 shown in FIG. 11, may be implemented through operation 20651 to operation 20657 shown in FIG. 15.

Operation 20651: Determine whether P is occluded.

Operation 20652: When P is not occluded, determine whether Q is occluded.

Operation 20653: When P is occluded, determine whether Q is occluded.

Operation 20654: Perform occlusion determining 1 when P is occluded and Q is occluded.

Operation 20655: Accept Q when P is not occluded and Q is not occluded, or when the occlusion determining 1 (namely, the first occlusion check described above) succeeds.

Operation 20656: Reject Q when P is occluded and Q is not occluded, or when P is not occluded and Q is occluded.

Operation 20657: Perform occlusion determining 2 (namely, the second occlusion check described above) when the occlusion determining 1 fails.

In some embodiments, if the point P is not occluded and the point Q is not occluded either, the neighborhood Q is accepted, to be specific, a spatial-domain multiplexing operation is performed between P and Q. If one of P and Q is occluded and the other is not occluded, the neighborhood Q is rejected, to be specific, no spatial-domain multiplexing operation is performed between P and Q. When both P and Q are occluded, occlusion determining further needs to be performed. An occlusion distance calculated by the visibility check module for the point P is denoted as Pot, an occlusion direction of the point P is Pod, an occlusion distance of the point Q is Qot, an occlusion direction of the point Q is Qod, a world space position corresponding to the point P is Wp, and a light sampling point position corresponding to the point Q is Sq. A distance from Wp to Sq is D, and a direction is L. The occlusion determining includes two operations. First, the occlusion determining 1 is performed. If Qot ≤ Pot and a dot product of Pod and L is less than a threshold a, where a may range from 0 to 1, the neighborhood Q is accepted through occlusion determining. Otherwise, the occlusion determining 2 is further performed. If Pot > bD, to be specific, if the occlusion distance Pot of the point P is greater than b times of D, the neighborhood Q is accepted through occlusion determining. A value of b is greater than 0. Usually, b may be equal to 1. If the occlusion determining 2 fails either, the neighborhood Q is rejected. This heuristic neighborhood filtering policy can be directly applied to a basic spatial-domain multiplexing process to form a heuristic spatial-domain multiplexing method in embodiments of the present disclosure, to efficiently retain shadow details of indirect light while reducing noise.

Operation 2066: Perform multi-sampling shading.

In some embodiments, after processing in all the foregoing processes is completed, each pixel has an optimal light sampling point after being processed by using a related algorithm. However, a final indirect light result calculated by using only one light sampling point obtained through resampling is full of a large amount of color noise, and color spectrum information of light is considered in none of the foregoing noise reduction processes. In this embodiment of the present disclosure, multi-sampling shading calculation is performed to resolve this problem. For a pixel whose shading information needs to be calculated, light calculation is performed by aligning sampling results of other pixels within a small neighborhood range of the pixel. For a calculation process, refer to a standard algorithm. The neighborhood range may be 3×3, 5×5, 7×7, or another size. A to-be-shaded pixel is denoted as P, and a neighborhood pixel is denoted as Q. Assuming that nine neighborhood pixels are selected, nine standard spatial-domain multiplexing operations are separately performed. During each time of multiplexing, light sampling information of P is set to null and is then reused with light sampling information of the point Q. Indirect light R is calculated based on a result obtained through reusing. Weighted averaging is performed on R obtained through nine times of calculation, to obtain a final indirect light calculation result of the pixel P. A weighted averaging policy is not specifically limited in this embodiment of the present disclosure. For example, a uniform weight may be selected. To be specific, if nine neighborhood pixels are selected, a weight of indirect light R obtained through calculation each time is 1/9. In addition, a multi-sampling shading module may also be configured to increase a resolution. All noise reduction processing before the module may be performed at a low resolution, for example, half resolution, provided that resolutions of initial noisy light results are kept consistent. In the multi-sampling shading module, shading calculation may be directly performed on high-resolution screen pixel information by using an existing noise reduction result, to increase a resolution and retain material details and geometrical details of a high screen resolution.

Operation 2067: Perform time-domain filtering.

Operation 2068: Perform spatial-domain filtering.

In some embodiments, filtering is mainly intended to eliminate remaining noise, to provide a smooth and stable noise-reduced indirect light result.

Operation 2069: Generate a noiseless light result.

Operation 207: Generate an indirect light result.

In some embodiments, FIG. 17 is a schematic flowchart 13 of a light update method for a virtual scene according to an embodiment of the present disclosure. The light update method for a virtual scene provided in this embodiment of the present disclosure may be implemented through operation 301 to operation 306 shown in FIG. 17. Because a calculation amount of operation 301 to operation 306 shown in FIG. 17 is less than a calculation amount of operation 201 to operation 207 shown in FIG. 11, real-time dynamic global illumination can be implemented on a mobile terminal. Operation 301 to operation 306 shown in FIG. 17 are described below.

Operation 301: Obtain three-dimensional scene information.

Operation 302: Obtain a scene color and depth of a perspective.

Operation 303: Update a scene voxel.

Operation 304: Generate a light probe system for the scene.

Operation 305: Generate a screen space probe system.

In some embodiments, to implement a global illumination solution on a mobile terminal, the system captures indirect light by using a screen probe, and operation 305 may be implemented in the following manner: Lightweight simplified deferred pipeline: In this system, a forward pipeline commonly used on a conventional mobile terminal is reconstructed into a lightweight simplified deferred pipeline. To be specific, one R8G8B8A8 map is output in addition to a screen color and a screen depth in a base drawing call (BasePass) stage. RGB channels store diffuse reflection colors, and an alpha channel stores compressed normal line information. Because the normal line information including only eight bits has insufficient precision, a grid-like defect occurs on a surface of an arc model. This system provides noise perturbation within a small range based on a normal line of the screen, to resolve the problem of the grid defect. During actual implementation, one bit may be reserved in the B channel to store information indicating whether a three-dimensional model is static or dynamic. This manner can resolve a problem of dynamic object smearing that occurs when a time super-sampling algorithm is performed without a speed map. Generation of screen probes: In this system, screen space is divided into 64×64 pixel grids. One screen space probe is placed in each grid. The screen space probe is generated through interpolation on a three-dimensional space probe. The probe only needs to store indirect light information of a hemispherical surface facing a camera. Time super-sampling may be performed through jitter of a screen probe generation position. Collection of screen probes: In this system, sampling and interpolation are performed on screen probes pixel by pixel at half resolution, and bilateral filtering with depth detection and normal line detection is performed to obtain half-resolution indirect light of the screen. If a speed map is generated in a rendering project, the speed map may be superposed for time super-sampling. If no speed map is generated in a rendering project, three-dimensional probes may be directly collected based on a dynamic object identifier while skipping collection of screen probes. Indirect light upsampling: Upsampling is performed on a half-resolution indirect light result through bilateral filtering. Optimization of a smearing problem: Because a screen probe has a limited resolution, if none of four probes around a rendering position passes depth detection or normal line detection, the system records the rendering position, and generates one more screen probe at the position in a next frame, to avoid a smearing problem caused by incorrect collection of probes. A smearing problem of a moving object is resolved by generating a screen probe before the moving object is drawn.

Operation 306: Generate an indirect light result.

In this way, in terms of a mobile terminal, embodiments of the present disclosure provide an innovative screen space injection solution and a screen probe system, to control performance consumption of dynamic global illumination within 4 ms on a high-end mobile device, and implement application of dynamic global illumination for a big world on the mobile terminal. In terms of a PC, embodiments of the present disclosure provide an innovative voxel update solution, and provide a new noise reduction process, including an innovative visibility check method, heuristic spatial-domain multiplexing, multi-sampling shading, and the like. This can provide a stable global illumination effect for a highly dynamic rendering animation, and provide a high-precision indirect light shadow.

Data related to a virtual scene or the like is involved in embodiments of the present disclosure. When embodiments of the present disclosure are applied to a specific product or technology, user permission or consent is required, and collection, use, and processing of related data need to comply with related laws, regulations, and standards in related countries and regions.

The following further describes an exemplary structure of the light update apparatus 455 for a virtual scene provided in embodiments of the present disclosure when the apparatus is implemented as software modules. In some embodiments, as shown in FIG. 2, software modules of the apparatus 455 that are stored in the memory 450 may include: a voxelization module, configured to perform voxelization processing on a virtual scene to obtain a plurality of initial voxels corresponding to the virtual scene, different initial voxels having different positions in the virtual scene, and the initial voxel carrying light information of a corresponding position in the virtual scene; a selection module, configured to select at least one to-be-updated voxel from the plurality of initial voxels in response to a content change in the virtual scene, a quantity of to-be-updated voxels being less than a quantity of initial voxels; a voxel update module, configured to update light information carried in each to-be-updated voxel, to obtain an updated voxel corresponding to each to-be-updated voxel; and a light update module, configured to update light information of each virtual viewpoint in a virtual scene with changed content based on the updated voxel and an initial voxel among the plurality of initial voxels other than the to-be-updated voxel, the virtual viewpoint being a virtual scene point able to be captured by a virtual camera in the virtual scene with changed content.

In some embodiments, the selection module is further configured to: in response to the content change in the virtual scene, obtain a camera position of the virtual camera in the virtual scene with changed content; obtain a voxel position of a voxel center point of each initial voxel in the virtual scene, and determine a voxel distance between the camera position and each voxel position; and select at least one to-be-updated voxel from the plurality of initial voxels based on the voxel distance.

In some embodiments, the selection module is further configured to: determine the initial voxel as a first initial voxel when the voxel distance of the initial voxel is less than or equal to a voxel distance threshold; or determine the initial voxel as a second initial voxel when the voxel distance of the initial voxel is greater than the voxel distance threshold; and select a first quantity of first initial voxels and a second quantity of second initial voxels from the plurality of initial voxels, and determine the selected first initial voxel and second initial voxel as the to-be-updated voxel, the first quantity being greater than the second quantity, and the first quantity being at least one.

In some embodiments, the voxel update module is further configured to perform the following processing on each to-be-updated voxel: determining, from virtual scene points of the virtual scene, a plurality of target virtual scene points located in the to-be-updated voxel; obtaining target light information of each target virtual scene point in the to-be-updated voxel, and performing weighted summation on all pieces of target light information to obtain updated light information; and updating the light information carried in the to-be-updated voxel to the updated light information, to obtain the updated voxel corresponding to the to-be-updated voxel.

In some embodiments, the voxel update module is further configured to perform the following processing on each target virtual scene point in the to-be-updated voxel: obtaining direct light information of the target virtual scene point, the direct light information indicating impact of a direct ray emitted by a virtual light source on light of the target virtual scene point; obtaining indirect light information of the target virtual scene point, the indirect light information indicating impact of a reflected ray corresponding to the direct ray on light of the target virtual scene point; and summing the direct light information and the indirect light information to obtain the target light information of the target virtual scene point.

In some embodiments, the direct light information includes direct light intensity, and the voxel update module is further configured to: determine a light source distance between the virtual light source in the virtual scene and the target virtual scene point; obtain a camera distance between the target virtual scene point and the virtual camera, and add up the camera distance and the light source distance to obtain a total distance; determine a loss value of light source light intensity of the virtual light source based on the total distance and the target virtual scene point; and subtract the loss value from the light source light intensity to obtain the direct light intensity of the target virtual scene point.

In some embodiments, the voxel update module is further configured to: determine, from a plurality of light probes arranged in the virtual scene, at least one target light probe whose distance from the target virtual scene point is less than a distance threshold, the light probe being configured to store light information of a corresponding position in the virtual scene with changed content; and when one target light probe exists, determine light information stored in the target light probe as the indirect light information of the target virtual scene point; or when a plurality of target light probes exist, determine a weight of each target light probe based on a probe distance between each target light probe and the target virtual scene point; and perform, based on the weight, weighted summation on light information stored in all target light probes, to obtain the indirect light information of the target virtual scene point.

In some embodiments, the light update apparatus for a virtual scene further includes an arrangement module, configured to: obtain a camera position of the virtual camera in the virtual scene; determine a virtual scene region that is in the virtual scene and whose distance from the camera position is less than a distance threshold as a first virtual scene region, and determine a virtual scene region that is in the virtual scene and whose distance from the camera position is greater than or equal to the distance threshold as a second virtual scene region; and arrange a third quantity of light probes in the first virtual scene region, and arrange a fourth quantity of light probes in the second virtual scene region, the third quantity being greater than the fourth quantity.

In some embodiments, the light update module is configured to perform the following processing on each virtual viewpoint in the virtual scene with changed content: determining, from the updated voxel and the initial voxel other than the to-be-updated voxel, a target voxel in which the virtual viewpoint is located, and obtaining light information of the target voxel; determining the light information of the target voxel as updated light information of the virtual viewpoint; and updating the light information of the virtual viewpoint to the updated light information of the virtual viewpoint.

In some embodiments, the light update apparatus for a virtual scene further includes a correction module, configured to: perform the following processing on updated light information obtained by updating each virtual viewpoint: performing spatial-domain correction on the updated light information to obtain first light information, and performing time-domain correction on the updated light information to obtain second light information; and performing error correction on the updated light information based on the first light information and the second light information.

In some embodiments, the correction module is further configured to: determine, from the updated voxel and the initial voxel other than the to-be-updated voxel, a target voxel in which the virtual viewpoint is located, and a plurality of adjacent voxels adjacent to the target voxel; select a target adjacent voxel from the plurality of adjacent voxels; and obtain light information of the target voxel and light information of each target adjacent voxel, and perform weighted summation on the light information of the target voxel and the light information of each target adjacent voxel, to obtain the first light information of the virtual viewpoint.

In some embodiments, the correction module is further configured to perform the following processing on each adjacent voxel: obtaining first occlusion information of the adjacent voxel and second occlusion information of the target voxel; and determining the adjacent voxel as the target adjacent voxel when the first occlusion information indicates that no virtual item exists between the adjacent voxel and the virtual camera and the second occlusion information indicates that no virtual item exists between the target voxel and the virtual camera; or performing an occlusion check on the adjacent voxel and the target voxel to obtain an occlusion check result when the first occlusion information indicates that a virtual item exists between the adjacent voxel and the virtual camera and the second occlusion information indicates that a virtual item exists between the target voxel and the virtual camera; and determining the adjacent voxel as the target adjacent voxel when the occlusion check result indicates that the adjacent voxel and the target voxel pass the occlusion check; or determining the adjacent voxel as a non-adjacent voxel when the first occlusion information indicates that a virtual item exists between the adjacent voxel and the virtual camera or the second occlusion information indicates that a virtual item exists between the target voxel and the virtual camera.

In some embodiments, the correction module is further configured to: obtain a first distance between the adjacent voxel and the corresponding virtual item, and a second distance between the target voxel and the corresponding virtual item; perform a first occlusion check on the adjacent voxel and the target voxel based on the first distance and the second distance, to obtain a first occlusion check result; and determine the occlusion check result as a first result when the first occlusion check result indicates that the adjacent voxel and the target voxel pass the first occlusion check; or when the first occlusion check result indicates that the adjacent voxel and the target voxel fail the first occlusion check, obtain a third distance between the adjacent voxel and the target voxel, and perform a second occlusion check on the adjacent voxel and the target voxel based on the second distance and the third distance, to obtain a second occlusion check result; and determine the occlusion check result as a first result when the second occlusion check result indicates that the adjacent voxel and the target voxel pass the second occlusion check; or determine the occlusion check result as a second result when the second occlusion check result indicates that the adjacent voxel and the target voxel fail the second occlusion check, the first result indicating that the adjacent voxel and the target voxel pass the occlusion check, and the second result indicating that the adjacent voxel and the target voxel fail the occlusion check.

In some embodiments, the correction module is further configured to: compare the first distance with the second distance to obtain a first comparison result; and determine the first occlusion check result as a third result when the first comparison result indicates that the first distance is less than or equal to the second distance and a dot product of a direction vector from the virtual viewpoint to a voxel center point of the target voxel and a direction vector from the target voxel to the corresponding virtual item is less than a dot product threshold, the third result indicating that the adjacent voxel and the target voxel pass the first occlusion check.

In some embodiments, the correction module is further configured to: compare the second distance with the third distance to obtain a second comparison result; and determine the second occlusion check result as a fourth result when the second comparison result indicates that the second distance is greater than the third distance, the fourth result indicating that the adjacent voxel and the target voxel pass the second occlusion check.

In some embodiments, the correction module is further configured to: determine, from the updated voxel and the initial voxel other than the to-be-updated voxel, a target voxel in which the virtual viewpoint is located, and obtain light information of the target voxel; determine a pixel corresponding to the virtual viewpoint, query for a plurality of historical voxels of the pixel in a historical update process from the plurality of initial voxels, and obtain light information of each historical voxel; and perform weighted summation on the light information of the target voxel and the light information of each historical voxel, to obtain the second light information of the virtual viewpoint.

In some embodiments, the correction module is further configured to: perform a validity check on the first light information to obtain a check result; and correct the updated light information to the second light information when the check result indicates that the first light information is invalid; or correct the updated light information to the first light information when the check result indicates that the first light information is valid.

In some embodiments, the correction module is further configured to: determine, from the updated voxel and the initial voxel other than the to-be-updated voxel, a target voxel in which the virtual viewpoint is located; construct a check ray by using the target voxel as a start point and the virtual camera as an end point in the virtual scene with changed content; and determine the check result as a first check result when the check ray intersects with a virtual item in the virtual scene with changed content, the first check result indicating that the first light information is invalid; or determine the check result as a second check result when the check ray does not intersect with a virtual item in the virtual scene with changed content, the second check result indicating that the first light information is valid.

In some embodiments, the light update apparatus for a virtual scene further includes: performing the following processing on each virtual viewpoint in the virtual scene with changed content: obtaining a pixel corresponding to the virtual viewpoint on an imaging plane of the virtual camera; determining a viewpoint distance between the virtual camera and the virtual viewpoint, and determining initial light information of the pixel based on the viewpoint distance and the updated light information of the virtual viewpoint; determining, from a plurality of screen probes arranged on the imaging plane, at least one target screen probe whose distance from the pixel is less than a distance threshold; and performing weighted summation on light information stored in each target screen probe and the initial light information of the pixel, to obtain target light information of the pixel, the target light information of the pixel being configured for performing picture rendering on the imaging plane of the virtual camera.

Embodiments of the present disclosure provide a computer program product. The computer program product includes a computer program or computer-executable instructions. The computer program or the computer-executable instructions are stored in a computer-readable storage medium. A processor of an electronic device reads the computer-executable instructions from the computer-readable storage medium, and the processor executes the computer-executable instructions, so that the electronic device performs the light update method for a virtual scene in embodiments of the present disclosure.

Embodiments of the present disclosure provide a computer-readable storage medium, having computer-executable instructions stored therein. When the computer-executable instructions are executed by a processor, the processor is enabled to perform the light update method for a virtual scene provided in embodiments of the present disclosure, for example, the light update method for a virtual scene shown in FIG. 3.

In some embodiments, the computer-readable storage medium may be a memory such as an FRAM, a ROM, a PROM, an EPROM, an EEPROM, a flash memory, a magnetic memory, a compact disc, or a CD-ROM; or may be various electronic devices including one of or any combination of the foregoing memories.

In some embodiments, the computer-executable instructions may be written in the form of a program, software, a software module, a script, or code and according to a programming language (including a compiler or interpreter language or a declarative or procedural language) in any form, and may be deployed in any form, including an independent program or a module, a component, a subroutine, or another unit suitable for use in a computing environment.

In an example, the computer-executable instructions may, but do not necessarily, correspond to a file in a file system, and may be stored in a part of a file that saves another program or other data, for example, be stored in one or more scripts in a hypertext markup language (HTML) file, stored in a file that is specially used for a program in discussion, or stored in a plurality of collaborative files (for example, be stored in files of one or more modules, subprograms, or code parts).

In an example, the computer-executable instructions may be deployed on one electronic device for execution, or may be executed on a plurality of electronic devices at one location, or may be executed on a plurality of electronic devices that are distributed at a plurality of locations and that are interconnected through a communication network.

To sum up, embodiments of the present disclosure have the following beneficial effects:

(1) Voxelization processing is performed on a virtual scene to obtain a plurality of initial voxels corresponding to the virtual scene. At least one to-be-updated voxel is selected from the plurality of initial voxels in response to a content change in the virtual scene. Light information carried in each to-be-updated voxel is updated. Light information of each virtual viewpoint in a changed virtual scene is updated based on the updated voxel and an initial voxel among the plurality of initial voxels other than the to-be-updated voxel. In this way, at least one to-be-updated voxel is selected from the plurality of initial voxels in response to the content change in the virtual scene, and a quantity of to-be-updated voxels is less than a quantity of initial voxels. Because the quantity of to-be-updated voxels is less than the quantity of initial voxels, the quantity of to-be-updated voxels is effectively reduced, so that update costs are effectively reduced, and light update efficiency for the virtual scene can be effectively improved.

(2) At least one to-be-updated voxel is selected from the plurality of initial voxels in response to the content change in the virtual scene, and the quantity of to-be-updated voxels is less than the quantity of initial voxels. Because the quantity of to-be-updated voxels is less than the quantity of initial voxels, the quantity of to-be-updated voxels is effectively reduced, so that update costs are effectively reduced, and light update efficiency for the virtual scene can be effectively improved.

(3) A first quantity of first initial voxels and a second quantity of second initial voxels are selected from the plurality of initial voxels, and the selected first initial voxel and second initial voxel are determined as the to-be-updated voxel. Because the selected first quantity is greater than the second quantity, a quantity of selected second initial voxels farther away from a virtual camera is less than a quantity of first initial voxels closer to the virtual camera. Because a possibility that the first initial voxel closer to the virtual camera includes a virtual viewpoint is higher, selecting more first initial voxels can effectively ensure that light information of the virtual viewpoint is subsequently updated. This effectively ensures light update accuracy for the virtual viewpoint, and therefore effectively improves light update accuracy.

(4) Direct light intensity of a target virtual scene point is accurately determined by determining a loss value of light source light intensity in a ray path, so that target light information of the target virtual scene point is subsequently accurately determined with reference to indirect light intensity. This effectively improves light accuracy of the virtual scene.

(5) At least one target light probe whose distance from the target virtual scene point is less than a distance threshold is determined from a plurality of light probes arranged in the virtual scene. A weight corresponding to each target light probe is determined. Weighted summation is performed, based on the weight, on light information stored in all target light probes, to obtain the indirect light intensity of the target virtual scene point. The light information stored in the target light probe can accurately indicate light information of a corresponding position in the virtual scene with changed content. In addition, the target light probe is close to the target virtual scene point, and therefore can more accurately indicate actual indirect light of the target virtual scene point. Moreover, weighted summation is performed on light information of a plurality of target light probes, to integrate the light information of the plurality of target light probes, so that the determined indirect light intensity can more accurately indicate light in the virtual scene with changed content, and accuracy of the determined indirect light intensity is effectively improved.

(6) Because a quantity of virtual viewpoints (virtual scene points that can be captured by the virtual camera) in a first virtual scene region is greater than a quantity of virtual viewpoints in a second virtual scene region, arranging more light probes in the first virtual scene region can effectively ensure light accuracy of the first virtual scene region, and arranging a small quantity of light probes in the second virtual scene region can reduce a quantity of arranged light probes while ensuring light accuracy of the second virtual scene region. This effectively saves storage space, and effectively improves light update efficiency for the virtual scene.

(7) Some initial voxels (to-be-updated voxels) of the virtual scene are updated to obtain updated voxels corresponding to the to-be-updated voxels, so that a quantity of to-be-updated voxels are effectively reduced, update costs are effectively reduced, and light update efficiency for the virtual scene can be effectively improved. In addition, indirect light information of the to-be-updated voxel can be accurately determined through arrangement of the light probes, direct light information of the to-be-updated voxel can be accurately determined through calculation of the loss value of the light source light intensity, and the direct light information and the indirect light information are summed, so that obtained updated light information is more accurate, and accuracy of the determined updated light information is effectively improved.

(8) A target voxel in which each virtual viewpoint is located is determined, and light information of the target voxel is determined as updated light information of the virtual viewpoint. When the target voxel is the to-be-updated voxel, because of accuracy of updated light information of the to-be-updated voxel, the updated light information of the to-be-updated voxel is determined as the updated light information of the virtual viewpoint, so that the updated light information of the virtual viewpoint is more accurate.

(9) A target adjacent voxel is selected from a plurality of adjacent voxels adjacent to the target voxel, and spatial-domain correction is performed on updated light information of the target voxel based on the target adjacent voxel, so that obtained first light information is more accurate, and the updated light information of the virtual viewpoint is more accurate.

(10) A first occlusion check is performed on an adjacent voxel and the target voxel to obtain a first occlusion check result, and the adjacent voxel is determined as the target adjacent voxel when the first occlusion check result indicates that the target voxel and the adjacent voxel pass the first occlusion check, so that the target adjacent voxel is determined based on a contribution of light information of the adjacent voxel to accuracy of the target voxel. Spatial-domain correction is performed on the updated light information of the target voxel based on the target adjacent voxel, so that the obtained first light information is more accurate, and the updated light information of the virtual viewpoint is more accurate.

(11) A first occlusion check is performed on an adjacent voxel and the target voxel to obtain a first occlusion check result, and a second occlusion check is further performed when the first occlusion check result indicates that the target voxel and the adjacent voxel fail the first occlusion check, so that the target adjacent voxel is determined based on a contribution of light information of the adjacent voxel to accuracy of the target voxel. Spatial-domain correction is performed on the updated light information of the target voxel based on the target adjacent voxel, so that the obtained first light information is more accurate, and the updated light information of the virtual viewpoint is more accurate.

(12) A pixel corresponding to the virtual viewpoint is determined. A plurality of historical voxels of the pixel in a historical update process are queried from the plurality of initial voxels. Time-domain correction is performed on the updated light information based on a historical voxel corresponding to each update within a time-domain range of updates, to obtain second light information, so that an error of the updated light information is effectively corrected, the obtained second light information is more accurate, and the updated light information of the virtual viewpoint is more accurate.

(13) Accuracy of the second light information is higher than accuracy of the updated light information, and accuracy of the first light information is higher than accuracy of the updated light information. The first light information mainly eliminates a spatial-domain error of the updated light information, and the second light information mainly eliminates a time-domain error of the updated light information. Error correction is performed on the updated light information based on the first light information and the second light information. In this way, obtained error-corrected updated light information not only can eliminate the spatial-domain error of the updated light information, but also can eliminate the time-domain error of the updated light information, so that the error-corrected updated light information is more accurate.

(14) In terms of a mobile terminal, embodiments of the present disclosure provide an innovative screen space injection solution and a screen probe system, to control performance consumption of dynamic global illumination within 4 ms on a high-end mobile device, and implement application of dynamic global illumination for a big world on the mobile terminal. In terms of a PC, embodiments of the present disclosure provide an innovative voxel update solution, and provide a new noise reduction process, including an innovative visibility check method, heuristic spatial-domain multiplexing, multi-sampling shading, and the like. This can provide a stable global illumination effect for a highly dynamic rendering animation, and provide a high-precision indirect light shadow.

The foregoing descriptions are merely embodiments of the present disclosure and are not intended to limit the protection scope of the present disclosure. Any modification, equivalent replacement, or improvement made without departing from the spirit and scope of the present disclosure shall fall within the protection scope of the present disclosure.

**Claims**

1. A method for updating light in a virtual scene, comprising:

   performing voxelization processing on a virtual scene to obtain a plurality of initial voxels, wherein different ones of the plurality of initial voxels comprise different positions in the virtual scene, and each of the plurality of initial voxels carries light information of a corresponding position in the virtual scene;
   selecting at least one to-be-updated voxel from the plurality of initial voxels in response to a content change in the virtual scene, wherein a quantity of the to-be-updated voxels is less than a quantity of the plurality of initial voxels;
   updating light information carried in each of the at least one to-be-updated voxel, to obtain an updated voxel; and
   updating light information of each virtual viewpoint in the virtual scene with changed content using the updated voxel and an initial voxel among the plurality of initial voxels other than the to-be-updated voxel, wherein the virtual viewpoint is a virtual scene point able to be captured by a virtual camera in the virtual scene with changed content.

2. The method of claim **1,** wherein selecting at least one to-be-updated voxel from the plurality of initial voxels in response to the content change in the virtual scene comprises:

in response to the content change in the virtual scene, obtaining a camera position of the virtual camera in the virtual scene with changed content;

for each of the plurality of initial voxels, obtaining a voxel position of a voxel center point of the initial voxel in the virtual scene, and determining a voxel distance between the camera position and the voxel position; and

selecting at least one to-be-updated voxel from the plurality of initial voxels using the voxel distances.

3. The method of claim 2, wherein selecting the at least one to-be-updated voxel from the plurality of initial voxels using the voxel distances comprises:

determining the initial voxel as a first initial voxel when the voxel distance of the initial voxel is less than or equal to a voxel distance threshold;

determining the initial voxel as a second initial voxel when the voxel distance of the initial voxel is greater than the voxel distance threshold; and

selecting a first quantity of first initial voxels and a second quantity of second initial voxels from the plurality of initial voxels, and determining the selected first initial voxel and second initial voxel as the to-be-updated voxel, wherein the first quantity being greater than the second quantity, and the first quantity being at least one.

4. The method of any one of claims 1 to 3, wherein updating light information carried in each of the at least one to-be-updated voxel, to obtain the updated voxel comprises:

for each of the at least one to-be-updated voxel, determining, from virtual scene points of the virtual scene, a plurality of target virtual scene points located in the to-be-updated voxel;

obtaining target light information of each of the plurality of target virtual scene points in the to-be-updated voxel, and performing weighted summation on all pieces of target light information to obtain updated light information; and

updating the light information carried in the to-be-updated voxel to the updated light information, to obtain the updated voxel.

5. The method of claim 4, wherein obtaining the target light information of each of the plurality of target virtual scene points in the to-be-updated voxel comprises:

for each of the plurality of target virtual scene points in the to-be-updated voxel,

obtaining direct light information of the target virtual scene point, wherein the direct light information indicates impact of a direct ray emitted by a virtual light source on light of the target virtual scene point;

obtaining indirect light information of the target virtual scene point, wherein the indirect light information indicates impact of a reflected ray corresponding to the direct ray on light of the target virtual scene point; and

summing the direct light information and the indirect light information to obtain the target light information of the target virtual scene point.

6. The method of claim 5, wherein the direct light information comprises direct light intensity, and wherein obtaining the direct light information of the target virtual scene point comprises:

determining a light source distance between the virtual light source in the virtual scene and the target virtual scene point;

obtaining a camera distance between the target virtual scene point and the virtual camera, and adding the camera distance and the light source distance to obtain a total distance;

determining a loss value of light source light intensity of the virtual light source using the total distance and the target virtual scene point; and

subtracting the loss value from the light source light intensity to obtain the direct light intensity of the target virtual scene point.

7. The method of claim 5, wherein the indirect light information comprises indirect light intensity, and wherein obtaining the indirect light information of the target virtual scene point comprises:

determining, from a plurality of light probes arranged in the virtual scene, at least one target light probe whose distance from the target virtual scene point is less than a distance threshold, wherein the light probe is configured to store light intensity at a corresponding position in the virtual scene with changed content; and

when one target light probe exists, determining light intensity stored in the target light probe as the indirect light intensity of the target virtual scene point; or

when a plurality of target light probes exist, determining a weight of each target light probe using a probe distance between each target light probe and the target virtual scene point; and performing, using the weights, weighted summation on light intensity stored in all target light probes, to obtain the indirect light intensity of the target virtual scene point.

8. The method of claim 7, wherein before determining, from the plurality of light probes arranged in the virtual scene, the at least one target light probe whose distance from the target virtual scene point is less than the distance threshold, the method further comprises:

   obtaining a camera position of the virtual camera in the virtual scene;
   determining a virtual scene region that is in the virtual scene and whose distance from the camera position is less than a distance threshold as a first virtual scene region, and determining a virtual scene region that is in the virtual scene and whose distance from the camera position is greater than or equal to the distance threshold as a second virtual scene region; and
   arranging a third quantity of light probes in the first virtual scene region, and arranging a fourth quantity of light probes in the second virtual scene region, wherein the third quantity is greater than the fourth quantity.

9. The method of any one of claims 1 to 8, wherein updating the light information of each virtual viewpoint in the virtual scene with changed content using the updated voxel and the initial voxel among the plurality of initial voxels other than the to-be-updated voxel comprises:
   for each virtual viewpoint in the virtual scene with changed content:

   determining, from the updated voxel and the initial voxel other than the to-be-updated voxel, a target voxel in which the virtual viewpoint is located, and obtaining light information of the target voxel;
   determining the light information of the target voxel as updated light information of the virtual viewpoint; and
   updating the light information of the virtual viewpoint to the updated light information of the virtual viewpoint.

10. The method of any one of claims 1 to 9, wherein after updating the light information of each virtual viewpoint in the virtual scene with changed content using the updated voxel and the initial voxel among the plurality of initial voxels other than the to-be-updated voxel, the method further comprises:
    performing the following processing on updated light information obtained by updating each virtual viewpoint:

    performing spatial-domain correction on the updated light information to obtain first light information, and performing time-domain correction on the updated light information to obtain second light information; and
    performing error correction on the updated light information using the first light information and the second light information.

11. The method of claim 10, wherein performing the spatial-domain correction on the updated light information to obtain the first light information comprises:

    determining, from the updated voxel and the initial voxel other than the to-be-updated voxel, a target voxel in which the virtual viewpoint is located, and a plurality of adjacent voxels adjacent to the target voxel;
    selecting a target adjacent voxel from the plurality of adjacent voxels; and
    obtaining light information of the target voxel and light information of each target adjacent voxel, and performing weighted summation on the light information of the target voxel and the light information of each target adjacent voxel, to obtain the first light information of the virtual viewpoint.

12. The method of claim 11, wherein selecting the target adjacent voxel from the plurality of adjacent voxels comprises:
    for each of the plurality of adjacent voxels:

    obtaining first occlusion information of the adjacent voxel and second occlusion information of the target voxel; and
    determining the adjacent voxel as the target adjacent voxel when the first occlusion information indicates that no virtual item exists between the adjacent voxel and the virtual camera and the second occlusion information indicates that no virtual item exists between the target voxel and the virtual camera; or
    performing an occlusion check on the adjacent voxel and the target voxel to obtain an occlusion check result when the first occlusion information indicates that a virtual item exists between the adjacent voxel and the virtual camera and the second occlusion information indicates that a virtual item exists between the target voxel and the virtual camera; and determining the adjacent voxel as the target adjacent voxel when the occlusion check result indicates that the adjacent voxel and the target voxel pass the occlusion check; or
    determining the adjacent voxel as a non-adjacent voxel when the first occlusion information indicates that a virtual item exists between the adjacent voxel and the virtual camera or the second occlusion information indicates that a virtual item exists between the target voxel and the virtual camera.

**13.** The method of claim 12, wherein performing the occlusion check on the adjacent voxel and the target voxel to obtain the occlusion check result comprises:

obtaining a first distance between the adjacent voxel and the virtual item existed between the adjacent voxel and the virtual camera, and a second distance between the target voxel and the virtual item existed between the target voxel and the virtual camera;
performing a first occlusion check on the adjacent voxel and the target voxel using the first distance and the second distance, to obtain a first occlusion check result; and
determining the first occlusion check result as a first result when the first occlusion check result indicates that the adjacent voxel and the target voxel pass the first occlusion check; or
when the first occlusion check result indicates that the adjacent voxel and the target voxel fail the first occlusion check, obtaining a third distance between the adjacent voxel and the target voxel, and performing a second occlusion check on the adjacent voxel and the target voxel using the second distance and the third distance, to obtain a second occlusion check result; and

determining the second occlusion check result as a first result when the second occlusion check result indicates that the adjacent voxel and the target voxel pass the second occlusion check; or
determining the second occlusion check result as a second result when the second occlusion check result indicates that the adjacent voxel and the target voxel fail the second occlusion check,

wherein the first result indicates that the adjacent voxel and the target voxel pass the occlusion check, and the second result indicates that the adjacent voxel and the target voxel fail the occlusion check.

**14.** The method of claim 13, wherein performing the first occlusion check on the adjacent voxel and the target voxel using the first distance and the second distance, to obtain the first occlusion check result comprises:

comparing the first distance with the second distance to obtain a first comparison result; and
determining the first occlusion check result as a third result when the first comparison result indicates that the first distance is less than or equal to the second distance and a dot product of a direction vector from the virtual viewpoint to a voxel center point of the target voxel and a direction vector from the target voxel to the corresponding virtual item is less than a dot product threshold,
wherein the third result indicates that the adjacent voxel and the target voxel pass the first occlusion check.

**15.** The method of claim 13, wherein performing the second occlusion check on the adjacent voxel and the target voxel using the second distance and the third distance, to obtain the second occlusion check result comprises:

comparing the second distance with the third distance to obtain a second comparison result; and
determining the second occlusion check result as a fourth result when the second comparison result indicates that the second distance is greater than the third distance,
wherein the fourth result indicates that the adjacent voxel and the target voxel pass the second occlusion check.

**16.** The method of claim 13, wherein performing the time-domain correction on the updated light information to obtain the second light information comprises:

determining, from the updated voxel and the initial voxel other than the to-be-updated voxel, a target voxel in which the virtual viewpoint is located, and obtaining light information of the target voxel;
determining a pixel corresponding to the virtual viewpoint, querying for a plurality of historical voxels of the pixel in a historical update process from the plurality of initial voxels, and obtaining light information of each of the plurality of historical voxels; and
performing weighted summation on the light information of the target voxel and the light information of the each of plurality of historical voxels, to obtain the second light information of the virtual viewpoint.

**17.** The method of claim 10, wherein performing the error correction on the updated light information using the first light information and the second light information comprises:

performing a validity check on the first light information to obtain a check result; and
correcting the updated light information to the second light information when the check result indicates that the first light information is invalid; or
correcting the updated light information to the first light information when the check result indicates that the first light information is valid.

18. The method of claim 17, wherein performing the validity check on the first light information to obtain the check result comprises:

determining, from the updated voxel and the initial voxel other than the to-be-updated voxel, a target voxel in which the virtual viewpoint is located;
constructing a check ray by using the target voxel as a start point and the virtual camera as an end point in the virtual scene with changed content; and
determining the check result as a first check result when the check ray intersects with a virtual item in the virtual scene with changed content, wherein the first check result indicates that the first light information is invalid; or
determining the check result as a second check result when the check ray does not intersect with a virtual item in the virtual scene with changed content, wherein the second check result indicates that the first light information is valid.

19. The method of any one of claims 1 to 15, wherein after updating the light information of each virtual viewpoint in the virtual scene with changed content using the updated voxel and the initial voxel among the plurality of initial voxels other than the to-be-updated voxel, the method further comprises:
for each virtual viewpoint in the virtual scene with changed content:

obtaining a pixel corresponding to the virtual viewpoint on an imaging plane of the virtual camera;
determining a viewpoint distance between the virtual camera and the virtual viewpoint, and determining initial light information of the pixel using the viewpoint distance and the updated light information of the virtual viewpoint;
determining, from a plurality of screen probes arranged on the imaging plane, at least one target screen probe whose distance from the pixel is less than a distance threshold, wherein the screen probe is configured to store light information of a corresponding position on the imaging plane; and
performing weighted summation on light information stored in each target screen probe and the initial light information of the pixel, to obtain target light information of the pixel,
wherein the target light information of the pixel is used for performing picture rendering on the imaging plane of the virtual camera.

20. An apparatus for updating light in a virtual scene, comprising:

a voxelization module, configured to perform voxelization processing on a virtual scene to obtain a plurality of initial voxels, wherein different ones of the plurality of initial voxels comprise different positions in the virtual scene, and each of the plurality of initial voxels carries light information of a corresponding position in the virtual scene;
a selection module, configured to select at least one to-be-updated voxel from the plurality of initial voxels in response to a content change in the virtual scene, wherein a quantity of to-be-updated voxels is less than a quantity of the plurality of initial voxels;
a voxel update module, configured to update light information carried in each of the at least one to-be-updated voxel, to obtain an updated voxel; and
a light update module, configured to update light information of each virtual viewpoint in the virtual scene with changed content using the updated voxel and an initial voxel among the plurality of initial voxels other than the to-be-updated voxel, wherein the virtual viewpoint is a virtual scene point able to be captured by a virtual camera in the virtual scene with changed content.

21. An electronic device, comprising:

a memory, configured to store computer-executable instructions or a computer program; and
a processor, configured to perform the method for updating light in a virtual scene of any one of claims 1 to 19 when executing the computer-executable instructions or the computer program stored in the memory.

22. A computer-readable storage medium having stored therein computer-executable instructions that, when executed by a processor, cause the processor to perform the method for updating light in a virtual scene of any one of claims 1 to 19.

23. A computer program product, comprising a computer program or computer-executable instructions, the method for updating light in a virtual scene of any one of claims 1 to 19 being implemented when the computer program or the computer-executable instructions are executed by a processor.

100 — Server 200

Network 300

400
410-1
App
410

600

## FIG. 1

Electronic device 500

Memory 450

Operating system 451

Network communication module 452

Light update apparatus for a virtual scene 455

Network interface 420

Processor 430

Voxelization module 4551

Selection module 4552

Voxel update module 4553

Light update module 4554

440

## FIG. 2

Perform voxelization processing on a virtual scene to obtain a plurality of initial voxels corresponding to the virtual scene ~101

Select at least one to-be-updated voxel from the plurality of initial voxels in response to a content change in the virtual scene ~102

Update light information carried in each to-be-updated voxel, to obtain an updated voxel corresponding to each to-be-updated voxel ~103

Update light information of each virtual viewpoint in a virtual scene with changed content based on the updated voxel and an initial voxel among the plurality of initial voxels other than the to-be-updated voxel ~104

## FIG. 3

Select at least one to-be-updated voxel from a plurality of initial voxels in response to a content change in a virtual scene — 102

In response to the content change in the virtual scene, obtain a camera position of a virtual camera in a virtual scene with changed content — 1021

Obtain a voxel position of a voxel center point of each initial voxel in the virtual scene, and determine a voxel distance between the camera position and each voxel position — 1022

Select at least one to-be-updated voxel from the plurality of initial voxels based on the voxel distance — 1023

# FIG. 4

Update light information carried in each to-be-updated voxel, to obtain an updated voxel corresponding to each to-be-updated voxel — 103

Determine, from virtual scene points of a virtual scene, a plurality of target virtual scene points located in the to-be-updated voxel — 1031

Obtain target light information of each target virtual scene point in the to-be-updated voxel — 1032

Perform weighted summation on all pieces of target light information to obtain updated light information — 1033

Update the light information carried in the to-be-updated voxel to the updated light information, to obtain the updated voxel corresponding to the to-be-updated voxel — 1034

## FIG. 5

Update light information of each virtual viewpoint in a virtual scene with changed content based on an updated voxel and an initial voxel among a plurality of initial voxels other than a to-be-updated voxel — 104

Determine, from the updated voxel and the initial voxel other than the to-be-updated voxel, a target voxel in which the virtual viewpoint is located, and obtain light information of the target voxel — 1041

Determine the light information of the target voxel as updated light information of the virtual viewpoint — 1042

Update the light information of the virtual viewpoint to the updated light information of the virtual viewpoint — 1043

## FIG. 6

Perform voxelization processing on a virtual scene to obtain a plurality of initial voxels corresponding to the virtual scene — 101

Select at least one to-be-updated voxel from the plurality of initial voxels in response to a content change in the virtual scene — 102

Update light information carried in each to-be-updated voxel, to obtain an updated voxel corresponding to each to-be-updated voxel — 103

Update light information of each virtual viewpoint in a changed virtual scene based on the updated voxel and an initial voxel among the plurality of initial voxels other than the to-be-updated voxel — 104

Perform spatial-domain correction on updated light information to obtain first light information — 105

Perform time-domain correction on the updated light information to obtain second light information — 106

Perform error correction on the updated light information based on the first light information and the second light information — 107

FIG. 7

Perform time-domain correction on updated light information to obtain
second light information — 106

Determine, from an updated voxel and an initial
voxel other than a to-be-updated voxel, a target
voxel in which a virtual viewpoint is located, and
obtain light information of the target voxel — 1061

Determine a pixel corresponding to the virtual
viewpoint, query for a plurality of historical voxels of
the pixel in a historical update process from a plurality
of initial voxels, and obtain light information of each
historical voxel — 1062

Perform weighted summation on the light
information of the target voxel and the light
information of each historical voxel, to obtain
second light information of the virtual viewpoint — 1063

## FIG. 8

Perform error correction on updated light information based on first light
information and second light information — 107

Perform a validity check on the first light
information to obtain a check result — 1071

Correct the updated light information to the
second light information when the check result
indicates that the first light information is invalid — 1072

Correct the updated light information to the first
light information when the check result indicates
that the first light information is valid — 1073

## FIG. 9

## FIG. 10

Scene color and depth
of a perspective — 202

Three-dimensional
scene information — 201

Scene voxel update — 203

Light probe system
for the scene — 204

Ray tracing — 205

Noise reduction — 206

Indirect light result — 207

## FIG. 11

Perform spatial-temporal division on a virtual scene — 2031

Collect to-be-updated non-empty voxels in a current frame — 2032

Mark a non-empty voxel in a non-empty voxel brick — 2033

Randomly select a non-empty voxel — 2034

Calculate a starting point in the voxel — 2035

Calculate direct light at the starting point in the voxel — 2036

Calculate indirect light at the starting point in the voxel — 2037

Perform an interpolation update on the indirect light — 2038

## FIG. 12

38

FIG. 13

Noisy light result (2061) → ReSTIR time-domain multiplexing (2062) → ReSTIR spatial-domain multiplexing (2063) → Visibility detection (2064) → Heuristic ReSTIR spatial-domain multiplexing (2065) → Multi-sampling shading (2066) → Time-domain filtering (2067) → Spatial-domain filtering (2068) → Noiseless light result (2069)

## FIG. 14

Obtain a spatial-domain multiplexing result Ss (20641)

↓

Emit a ray to a sampling point Ss (20642)

↓

Does occlusion occur? (20643)

— Yes → Mark the sampling point Ss as invalid (20644) → Restore a time-domain multiplexing result St (20646) → Store an occlusion distance Ot and an occlusion direction Od (20647)

— No → Mark the sampling point Ss as valid (20645)

## FIG. 15

Is P occluded? (20651) — Yes → Is Q occluded? (20653) — Yes → Occlusion determining 1 (20654)

Is P occluded? — No → Is Q occluded? (20652)

Is Q occluded? (20652) — Yes → Reject

Is Q occluded? (20652) — No → Accept (20655)

Is Q occluded? (20653) — No → Reject (20656)

Occlusion determining 1 (20654) — Yes → Accept

Occlusion determining 1 (20654) — No → Occlusion determining 2 (20657)

Occlusion determining 2 (20657) — No → Reject (20656)

Occlusion determining 2 (20657) — Yes → Accept

## FIG. 16

Scene color and depth of a perspective (302)

↓

Three-dimensional scene information (301) → Scene voxel update (303)

↓

Light probe system for the scene (304)

↓

Screen space probe system (305)

↓

Indirect light result (306)

## FIG. 17

## INTERNATIONAL SEARCH REPORT

| International application No. |
| --- |
| **PCT/CN2024/073461** |

**A.  CLASSIFICATION OF SUBJECT MATTER**

G06T 15/50(2011.01)i

According to International Patent Classification (IPC) or to both national classification and IPC

**B.  FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNTXT, ENTXT, ENTXTC, IEEE, CNKI: 游戏, 虚拟, 场景, 体素, 视点, 更新, 光照, 照明, 光照强度, 辐照度, 光通量, 辐射照度, 辐射通量, 数量, game, virtual, voxel, viewpoint, update, light, illumination, number, quantity

**C.  DOCUMENTS CONSIDERED TO BE RELEVANT**

| Category* | Citation of document, with indication, where appropriate, of the relevant passages | Relevant to claim No. |
| --- | --- | --- |
| A | CN 113034656 A (BEIJING PERFECT WORLD SOFTWARE TECHNOLOGY DEVELOPMENT CO., LTD.) 25 June 2021 (2021-06-25)<br>description, paragraphs 0096-0115, and figure 2 | 1-23 |
| A | CN 105640575 A (KABUSHIKI KAISHA TOSHIBA et al.) 08 June 2016 (2016-06-08)<br>entire document | 1-23 |
| A | CN 107452048 A (NETEASE (HANGZHOU) NETWORK CO., LTD.) 08 December 2017 (2017-12-08)<br>entire document | 1-23 |
| A | US 2014342823 A1 (KAPULKIN, Arseny et al.) 20 November 2014 (2014-11-20)<br>entire document | 1-23 |
| A | US 2022036643 A1 (TENCENT TECHNOLOGY (SHENZHEN) CO., LTD.) 03 February 2022 (2022-02-03)<br>entire document | 1-23 |
| A | US 2018365886 A1 (SAMSUNG ELECTRONICS CO., LTD.) 20 December 2018 (2018-12-20)<br>entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 April 2024** | **11 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073461**

| Patent document cited in search report | | | Publication date (day/month/year) | Patent family member(s) | | | Publication date (day/month/year) |
|---|---|---|---|---|---|---|---|
| CN | 113034656 | A | 25 June 2021 | None | | | |
| CN | 105640575 | A | 08 June 2016 | US | 2016155228 | A1 | 02 June 2016 |
| | | | | JP | 2016101358 | A | 02 June 2016 |
| | | | | DE | 102015015421 | A1 | 02 June 2016 |
| CN | 107452048 | A | 08 December 2017 | WO | 2017206325 | A1 | 07 December 2017 |
| | | | | US | 2020302683 | A1 | 24 September 2020 |
| US | 2014342823 | A1 | 20 November 2014 | US | 2016098857 | A1 | 07 April 2016 |
| US | 2022036643 | A1 | 03 February 2022 | JP | 2022548170 | A | 16 November 2022 |
| | | | | EP | 3989175 | A1 | 27 April 2022 |
| | | | | WO | 2021109688 | A1 | 10 June 2021 |
| | | | | KR | 20220024681 | A | 03 March 2022 |
| | | | | CN | 110992466 | A | 10 April 2020 |
| | | | | HK | 40022542 | A0 | 20 November 2020 |
| US | 2018365886 | A1 | 20 December 2018 | WO | 2017099557 | A2 | 15 June 2017 |
| | | | | KR | 20170072151 | A | 26 June 2017 |
| | | | | GB | 201521698 | D0 | 20 January 2016 |

Form PCT/ISA/210 (patent family annex) (July 2022)

**REFERENCES CITED IN THE DESCRIPTION**

**Patent documents cited in the description**

- CN 2023103186815